# EUROPEAN PATENT APPLICATION

(11) **EP 2 236 568 A1**
(43) Date of publication of application: **06.10.2010**
(21) Application number: 10158118.9
(22) Date of filing: 29.03.2010
(51) Int. Cl.: C09D 11/10

(54) **Actinic energy radiation curable ink-jet ink and ink-jet image forming method**

(30) Priority: 02.04.2009 JP 2009089861
(71) Applicant: Konica Minolta IJ Technologies, Inc., Hino, Tokyo 191-8511 (JP)
(72) Inventor: Kawashima, Kouki, Tokyo Tokyo 191-8511 (JP); Nakamura, Masaki, Tokyo Tokyo 191-8511 (JP); Nakajima, Atsushi, Tokyo Tokyo 191-8511 (JP); Takaku, Yusuke, Tokyo Tokyo 191-8511 (JP)
(74) Representative: Bröcher, Dirk Joachim

(57) **Abstract**

Provided is an actinic energy radiation curable ink-jet ink, an ink-jet recording method, and printed matter satisfying ink storage stability, ejection stability, weather resistance, flexibility, safety, odorless properties. An actinic energy radiation curable ink-jet ink comprises a cationically polymerizable compound and a photo-cationic polymerization initiator, wherein the cationically polymerizable compound comprises a vinyl ether group as a. reactive group, the photo-cationic polymerization initiator is a photo acid generator, a amount of generation of protonic acid from the photo acid generator is 1 x 10⁻⁴ mol/L or less, and comprising a radical polymerization inhibitor; wherein the amount of generation of protonic acid is defined as a difference of a hydrogen ion concentration (mol/L) in dioxane solution between immediately after preparation and after refluxing when 0.02 mol/L of the photo acid generator in dioxane solution are refluxed 20 hours under atmospheric pressure.

## Description

### CROSS-REFERENCE TO RELATED APPLICATION

This application is based on Japanese Patent Application No. 2009-089861 filed on April 2, 2009 with Japan Patent Office, the entire content of which is hereby incorporated by reference.

### FIELD OF TECHNOLOGY

The present invention relates to an actinic energy radiation curable ink-jet ink, an ink-jet image forming method and a printed matter for ink-jet recording systems.

### TECHNICAL BACKGROUND

Over recent years, due to simple and inexpensive production of images, ink-jet recording systems have been used in a wide variety of printing fields including photograph, various types of printing, marking, and specialty printing such as color filters.

As an ink-jet ink used in such ink-jet recording systems, there are various types of ink-jet inks such as an aqueous ink containing water as a main solvent, an oil-based ink mainly containing a non-volatile solvent which does not volatilize at room temperature and containing substantially no water, a non-aqueous ink mainly containing a solvent which volatiles at room temperature and containing substantially no water, a hot melt ink in which ink, being solid at room temperature, is heat-melted for printing, or an actinic energy radiation curable ink-jet ink which is cured with actinic energy radiation such as light after printing. These inks are appropriately used based on the intended purposes. Of these, the actinic energy radiation curable ink-jet ink is characterized by being printed on various printing media due to rapid curability, having thereby received much attention as a next-generation ink-jet ink replacing the aqueous ink, the oil-based ink, and the non-aqueous ink requiring a large drying load and having a limited use of recording media. Therefore, such an actinic energy radiation curable ink-jet ink is an ink-jet ink whose use is expected to expand.

Conventionally, as the actinic energy radiation curable ink-jet ink, there are a radically polymerizable and a cationically polymerizable ink-jet inks. Further, of these, known is a non-solvent-type curable ink-jet ink containing substantially no solvent and a solvent dilution-type curable ink-jet ink of low viscosity positively diluted with water or a solvent. Fundamentally, the actinic energy radiation curable ink-jet ink features quick drying performance. Therefore, there has widely been brought into practical use a non-solvent-type curable ink-jet ink requiring no solvent-drying load during ink-jet recording or a curable ink-jet ink with a slightly added solvent. Of these, the radically polymerizable ink-jet ink features a wide selection of materials, which, thereby, has great flexibility for ink designing and is widely being researched and developed, resulting in being put into practical use. In contrast, the cationically polymerizable ink-jet ink is unaffected by polymerization inhibition caused by oxygen, and thereby has such advantages that excellent small droplet curability and excellent curability with a low energy radiation source are expressed and a relatively highly flexible cured film can be obtained.

Utilizing these advantages, application examples of such an actinic energy radiation curable ink-jet ink are cited as follows. For example, with regard to printing of outdoor notice boards and advertising boards and printed matter of materials having a curved surface, a large-sized ink-jet printer is used. And as recording media, recording media formed of a plastic such as polyvinyl chloride or polyethylene are used. In these fields, long-term outdoor weather resistance, anti-abrasion properties, and solvent resistance are required. Further, use as rapping advertisement in buses or trains is occasionally done. In this case, printed matter is allowed to adhere to a vehicle body having a curved or an uneven surface. Therefore, a cured film is required to be flexible. As ink droplet size, a relatively large size is used due to large-sized printing, resulting in large film thickness. Therefore, when actinic energy radiation is inadequately transmitted into the interior of the film due to absorption by colorants such as pigments, poor curing occurs, resulting in impaired adhesion to the recording medium. Conventionally, in these fields, a non-aqueous ink-jet ink employing a pigment has been used. However, in use of such a non-aqueous ink-jet ink, printed matter is dried via evaporation of an organic solvent and penetration into the substrate, resulting in safety and odor problems. Accordingly, in recent years, an actinic energy radiation curable ink-jet ink is being applied utilizing its low odor properties and quick drying performance.

An actinic energy radiation curable ink-jet ink is applicable to printing for soft plastic packaging materials, utilizing the feature of printing ability with respect to a non-penetrable substrate. However, in this field, high definition, high image quality, and high productivity are required. Thereby, it is desirable to realize smaller droplets with respect to ink droplets ejected from the inkjet head, to provide the ink with the ability to respond to thin film printing, and to achieve enhanced curability with no curing inhibition resulting from the ambience. Further, enhanced image quality having no problem of bleeding among droplets is required. Due to use for those held in the user's hand, safety and low odor are also required.

In the fields of various types of printed matter such as newspapers, magazines, books, or small-lot catalogs, a main technology is currently a conventional printing technology such as offset printing . An ink-jet recording system is being considered to be applied due to its features, specifically, such as cost performance in small-lot print run, delivery time shortening, or printability of variable data such as direct mail addressing. In these fields, problems such as printing speed, printing image quality, and drying load are noted. Therefore, the applicability of an actinic energy radiation curable ink-jet ink exhibiting quick drying performance and high ejection stability is expected. With the popularization of CTP (Computer to Plate) systems, plate images of a printing plate are also expected to be produced via an ink-jet system employing an actinic energy radiation curable ink-jet ink. Also in this case, required are realization of smaller droplet size, high image quality by a thinner film, reliability of ink-jet ejection, and printing durability.

As just described, with regard to an actinic energy radiation curable ink-jet ink, a fundamental technology having high general versatility is expected to be established to respond to a wide variety of demands such as various droplet sizes, recording media, printed matter size, printed film thickness, and various performing properties such as weather resistance, anti-abrasion properties, solvent resistance, flexibility, safety, odorless properties during printing, odorless properties of printed matter, or low running cost.

As a cationically polymerizable ink-jet ink composition, those, in which an oxetane compound, an alicyclic epoxy compound, or a vinyl ether compound is used as a polymerizable compound, are widely known (for example, refer to Patent Documents 1 and 2). In any of the ink-jet ink compositions disclosed therein, the added amount of an alicyclic epoxy compound is needed to increase to realize adequate curing sensitivity, which, thereby, has produced problems such as an increase in ink viscosity or a decrease in flexibility of a cured film. From the viewpoint of realizing ink viscosity reduction and flexibility of a cured film, a vinyl ether compound is a useful monomer due to its relatively low viscosity, as well as low glass transition point of a cured film. Therefore, actinic energy radiation curable ink-jet inks containing vinyl ethers are proposed and disclosed (for example, refer to Patent Document 2).

In Patent Document 2, an image forming method which performs curing with an LED light source is disclosed in which an ink-jet ink containing a vinyl ether compound, a pigment, a dispersant, a diallyl phthalate prepolymer, a cationic polymerization initiator, and a sensitizer are used. Further, with regard to this ink-jet ink, when the ink is stored under a high temperature ambience, viscosity is increased, which has made it clear that a problem is noted in ink storage. Still further, when the ink is stored with storage time, the liquid repellency of the ink-jet nozzles is decreased, which has made it clear that there is also a problem in ejection stability.

In Patent Documents 3 and 4, an improvement of storage stability by addition of a vinyl ether compound and a radical polymerization inhibitor is disclosed. However, degradation with storage time, especially degradation of nozzle ink repellency cannot be fully prevented and an ejection stability cannot be kept.

In this manner, an actinic energy radiation curable ink-jet ink is expected to be established to respond to various performing properties such as weather resistance, anti-abrasion properties, solvent resistance, flexibility, safety, odorless properties during printing, odorless properties of printed matter, or low running cost as well as especially preventing increase of viscosity and degradation of nozzle ink repellency in ink storage.
[Patent Document 1] Japanese Patent Publication No. 3014251
[Patent Document 2] Unexamined Japanese Patent Application Publication (hereinafter referred to as JP-A) No. 2008-280460
[Patent Document 3] JP-A No. 2006-274052
[Patent Document 4] JP-A No. 2005-41961

### SUMMARY

In view of the above problems, the present invention was completed. An object of the present invention is to provide an actinic energy radiation curable ink-jet ink, in which an increase of ink viscosity and a degradation of nozzle ink repellency in ink storage is prevented, and satisfied are excellent ejection stability, flexibility, weather resistance, safety, odorless properties during printing, and odorless properties of printed matter, as well as to provide an ink-jet recording method and printed matter using the same.

The object of the present invention can be achieved by the following constitution.
1. An actinic energy radiation curable ink-jet ink comprising a cationically polymerizable compound, a photo-cationic polymerization initiator and a radical polymerization inhibitor, wherein the cationically polymerizable compound comprises a compound having a vinyl ether group as a reactive group, the photo-cationic polymerization initiator is a photo acid generator, an amount of generation of protonic acid from the photo acid generator is 1 x 10⁻⁴ mol/L or less;
   wherein the amount of generation of protonic acid is defined as a difference of a hydrogen ion concentration (mol/L) in a dioxane solution between immediately after preparation and after refluxing when 0.02 mol/L of the photo acid generator in the dioxane solution are refluxed 20 hours under atmospheric pressure.
2. The actinic energy radiation curable ink-jet ink of item 1, wherein the photo acid generator substantially does not include a sulfonium salt compound represented by Formula [A] ; 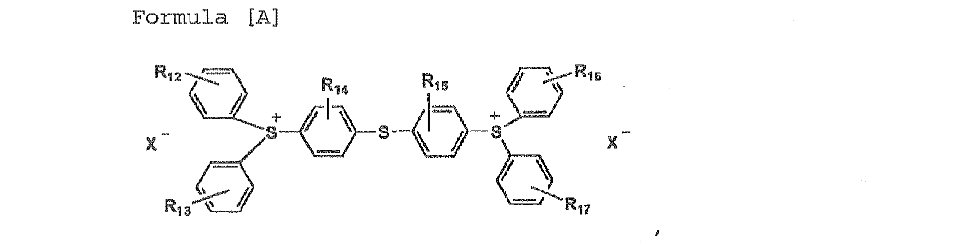 wherein R₁₂ to R₁₇ each represent a hydrogen atom or a substituent.
3. The actinic energy radiation curable ink-jet ink of item 1 or 2, wherein the photo acid generator is at least one of a sulfonium salt compound selected from Formula [1] to [5]; 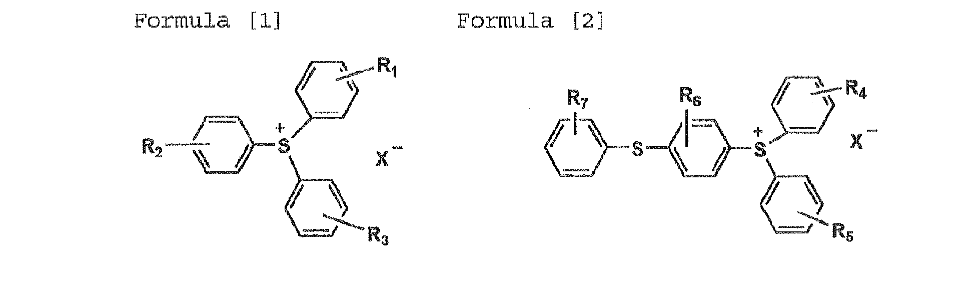 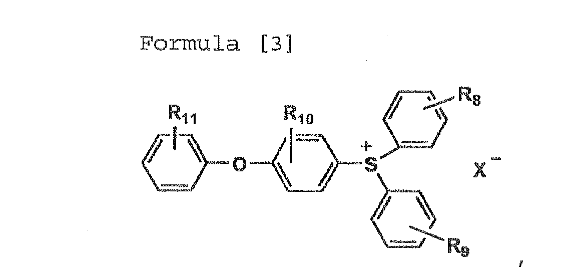 wherein R₁ to R₁₁ each represent a hydrogen atom or a substituent; 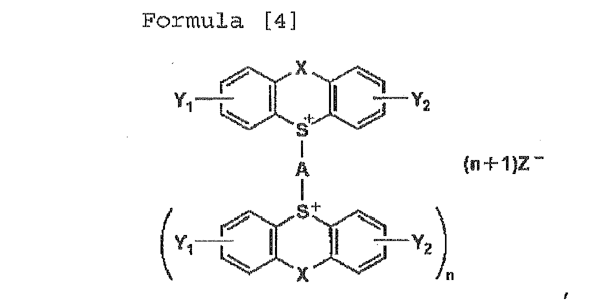 wherein n represents 1 or 2; X represents S, O, CH₂, CO, a single bond or N-R wherein R represents a hydrogen atom, an alkyl group or an aryl group; Y₁ and Y₂ each represent an hydrogen atom, a linear or a branched alkyl group having 1 to 6 carbon atoms, a cycloalkyl group, O-alkyl group, a hydroxyl group, a halogen atom, S-alkyl group or S-aryl group; Z⁻ represents MQₚ; M represents B, P, As or Sb; Q represents F, Cl, Br, I or perfluorophenyl; p represents an integer of 4 to 6; A represent Formula [4A]; 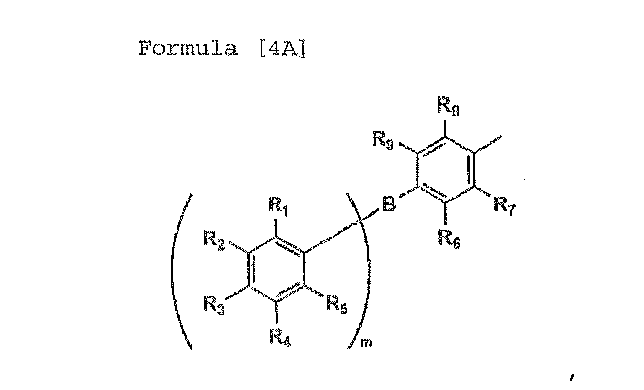 wherein m represents 1 or 2; R₁ to R₉ represent a single bond, a hydrogen atom, a halogen atom, a nitro group, a linear or a branched alkyl group having 1 to 6 carbon atoms, a linear or a branched alkoxy group having 1 to 6 carbon atoms, or a linear or a branched alkylthio group having 1 to 6 carbon atoms, provided that at least one of R₁ to R₅ is a hydrogen atom;
   when m is 1, B represents O, S, SO, So₂, CH₂, a single bond, NR (R represents a hydrogen atom or a linear or a branched alkyl group having 1 to 6 carbon atoms) or a linear or a branched alkylene group having 2 to 18 carbon atoms and has two hetero atoms selected from O, S and N-R at terminals; when m is 2, B represents N, a linear or a branched alkyl group having 3 to 18 carbon atoms and has three hetero atoms selected from O, S and N-R; 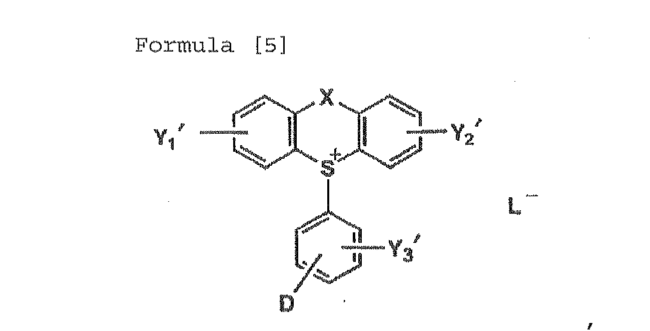 wherein X represents S, O, CH₂, CO, a single bond or N-R wherein R represents a hydrogen atom, an alkyl group or an aryl group; Y₁', Y₂' and Y₃' each represent a hydrogen atom, a linear or a branched alkyl group having 1 to 6 carbon atoms, a cycloalkyl group, O-alkyl group, a hydroxyl group, a halogen atom, S-alkyl group or S-aryl group or NR₁R₂, R₁, R₂ represents a hydrogen atom, a linear or a branched alkyl group, a cycloalkyl group or an aryl group; L- represents Moₚ; M represents B, P, As or Sb; Q represents F, Cl, Br, I or perfluorophenyl; p represents an integer of 4 to 6;
   D represents a linear or a branched alkyl group or a cycloalkyl group having 2 to 6 carbon atoms having 1 or more groups as a substituent selected from OH, OR, NH₂, NHR, NR₁R₂, SH and SR (R, R₁ or R₂ each represent a hydrogen atom, a linear or a branched alkyl group, a cycloalkyl group or an aryl group), a linear or a branched alkylthio group or a cycloalkylthio group having 2 to 6 carbon atoms having 1 or more groups as a substituent selected from SH, SR, OH, OR, NH₂, NHR and NR₁R₂ (R, R₁ or R₂ each represent a hydrogen atom, a linear or a branched alkyl group, a cycloalkyl group or an aryl group), or NR₃R₄ (R₃ and R₄ each represent a hydrogen atom, an aryl group, or a linear or a branched alkyl group having 1 to 12 carbon atoms).
4. A method for an inkjet recording comprising steps of:
   jetting the actinic energy radiation curable ink-jet ink of any one of items 1 to 3 from an inkjet nozzle on a recording media; and
   curing the actinic energy radiation curable ink-jet ink by irradiating the actinic energy ray.
5. A printed matter recorded by the method for the inkjet recording of item 4.
6. An actinic energy radiation curable ink-jet ink comprising a cationically polymerizable compound, a photo-cationic polymerization initiator and a radical polymerization inhibitor, wherein the cationically polymerizable compound comprises a compound having the ring skeleton and 2 or more vinyl ether groups, the photo-cationic polymerization initiator is a photo acid generator, a amount of generation of protonic acid from the photo acid generator is 1 x 10⁻⁴ mol/L or less,;
   wherein the amount of generation of protonic acid is defined as a difference of a hydrogen ion concentration (mol/L) in a dioxane solution between immediately after preparation and after refluxing when 0.02 mol/L of the photo acid generator in the dioxane solution are refluxed 20 hours under atmospheric pressure.
7. The actinic energy radiation curable ink-jet ink of item 6, wherein the ring skeleton of the compound having the ring skeleton and 2 or more vinyl ether groups comprises an alicyclic skeleton.
8. The actinic energy radiation curable ink-jet ink of item 6 or 7, wherein the ring skeleton of the compound having the ring skeleton and 2 or more vinyl ether groups comprises a cyclohexane skeleton.
9. The actinic energy radiation curable ink-jet ink of items 6 to 8, wherein the compound having the ring skeleton and 2 or more vinyl ether groups comprises a substituted or unsubstituted cyclohexane divinyl ether.
10. The actinic energy radiation curable ink-jet ink of items 6 to 9, wherein the cationically polymerizable compound further comprises a compound having the vinyl ether group but without having the ring skeleton.

The present invention made it possible to provide an actinic energy radiation curable ink-jet ink preventing an increase of ink viscosity and a degradation of nozzle ink repellency in ink storage as well as exhibiting excellent ejection stability, flexibility, weather resistance, safety, odorless properties during printing, and odorless properties of printed matter, as well as to provide an ink-jet recording method and printed matter using the same.

### BRIEF DESCRIPTION OF THE DRAWINGS

[FIG. 1] A front elevation view showing an example of the constitution of a main section of an ink-jet recording apparatus used in the ink-jet recording method of the present invention
[FIG. 2] A top view showing another example of the constitution of a main section of an ink-jet recording apparatus used in the ink-jet recording method of the present invention

### DESCRIPTION OF THE ALPHANUMERIC DESIGNATIONS

- 1:: recording apparatus
- 2:: head carriage
- 3:: recording head
- 31:: ink ejection orifice
- 4:: irradiation member
- 5:: platen section
- 6:: guide member
- 7:: bellows structure
- 8:: irradiation source
- P:: recording medium

### THE BEST EMBODIMENT FOR EMBODYING THE INVENTION

An embodiment to carry out the present invention will now be detailed.

In view of the above problems, the present inventors conducted diligent investigations, and thereby found that by using an actinic energy radiation curable ink-jet ink containing a cationically polymerizable compound and a photo-cationic polymerization initiator, wherein the cationically polymerizable compound comprises a compound having a vinyl ether group as a reactive group, the photo-cationic polymerization initiator is a photo acid generator, an amount of generation of protonic acid from the photo acid generator is 1 x 10⁻⁴ mol/L or less, and comprising a radical polymerization inhibitor, an actinic energy radiation curable ink-jet ink was able to be realized exhibiting excellent ink storage stability by preventing increase of ink viscosity and deterioration of liquid repellency to the ink-jet nozzles, and ejection stability, as well as exhibiting excellent flexibility, weather resistance, safety of formed image, odorless properties during printing, odorless properties of printed matter.

Namely, the present inventors conducted detailed investigations on effects of dark reaction mechanism during storage and countermeasure thereto of an actinic energy radiation curable ink-jet ink having a vinyl ether group as a reactive group (hereinafter also referred to as an ink-jet ink or simply as an ink). Thereby it was found that in inkjet ink having polymerizable compound having vinyl ether group, a very small quantity of a photo polymerization initiator is decomposed to generate a radical compound during ink storage, and polymerization occurs due to the radical compound. The compound produced by this polymerization results in increasing ink viscosity and deterioration of nozzle ink repellency and finally causing poor ejecting of ink-jet head. Moreover the reactivity of polymerization of vinyl ether compound due to the radical compound was remarkably higher than that of well-known other cationically polymerizable compound such as oxetane compound or epoxy compound. Therefore inventor conducted detailed investigations on adding radical polymerization inhibitor in order to trap foresaid radical compound, and found improvement to some extent. However it is insufficient to solve the storage described above over times. The present inventors further conducted investigations on a relation between an amount of generation of protonic acid and storage stability. Thereby it was found that when an amount of generation of protonic acid was allowed to fall within certain constant critical value, forming of radical compound from photo polymerization initiator and further polymerization reaction of vinyl ether compound due to radical compound can be suppressed and remarkable improvement of storage stability was realized. These remarkable improvement and criticality were not realized in a well-known other cationically polymerizable compound such as oxetane compound or epoxy compound.

Mechanism of the improvement above which can only obtained by the case of vinyl ether compound was considered below. An amount of radical compound trapped by a constant amount of a radical inhibitor is limited to a constant level, because an effect of a polymerization inhibiting by a radical polymerization inhibitor disappears when a radical polymerization inhibitor reacts with a radical compound which generate from decomposition of initiator. On the contrary, in an ink containing vinyl ether compound, even though reasons were not understood in detail, it is considered that when a concentration of radical compound reaches to a certain constant level, a radical compound is regenerated due to a certain regeneration reaction process, results that a constant amount of a radical polymerization inhibitor cannot trap regenerated radical compound. However when a concentration of radical compound is suppressed within certain constant value, regeneration reaction process of radical compound cannot act, and radical compound can be fully trapped by a constant amount of a radical polymerization inhibitor.

Each of the constituent elements of the actinic energy radiation curable ink-jet ink of the present invention will now be detailed.

### <<Cationically Polymerizable Compounds>>

As a cationically polymerizable compound in actinic energy radiation curable ink-jet ink, vinyl ether compound, epoxy compound and oxetane compound are generally used. However, the present invention is characterized by containing polymerizable compound VE (vinyl ether compound VE) having at least vinyl ether group as a reactive group in the ink-jet ink. Excellent weather resistance and flexibility of cured film can be obtained by using vinyl ether compound comparing to an ink using cationically polymerizable compound such as oxetane compound or alicyclic epoxy compound. In order to obtain an actinic energy radiation curable ink-jet ink which exhibit effects of the present invention such as a prevention of decreasing ink repellency at nozzle surface, excellent ejection stability and flexibility of cured film, excellent weather resistance, a content of vinyl ether compound VE is preferably 35 % by mass or more, more preferably 50 % by mass ore more based on a total of ink composition. When a content of vinyl ether compound VE is less than 35 % by mass, there might be a case that it is difficult to obtain sufficient weather resistance and flexibility of cured film.

Vinyl ether compound will be listed below:

### «Bis-vinyl ether compound»

Bis-vinyl ether compound of the present invention is defined as a compound which comprises two vinyl ether groups as functional groups in one molecule. Specific example of bis-vinyl ether compound include: 1, 4-butanediol divinyl ether, 1,6-hexanediol divinyl ether, neopentylglycol divinyl ether, nonanediol divinyl ether, cyclohexandiol divinyl ether, cyclohexane dimethanol divinyl ether, diethyleneglycol divinyl ether, triethyleneglycol divinyl ether (TEGDVE), trimethylolpropane divinyl ether, ethyleneoxide modified trimethylolpropane divinyl ether, and pentaerythritol divinyl ether.

Other specific example include: vinyl ether compound having alicyclic skeleton containing at least oxygen atom disclosed in Japanese Patent Publication No. 4037856, vinyl ether compound having alicyclic skeleton disclosed in JP-A No. 2005-015396, 1-indanyl vinyl ether disclosed in JP-A No. 2008-137974, and 4-acetoxycyclohexyl vinyl ether disclosed in JP-A No. 2008-150341.

Further α- or β- position of vinyl ether group in above vinyl ether compound can be introduced by substituent group such as substituting propenyl ether group, isopropenyl ether group, butenyl ether group and isobutenyl ether group .

Among these bis-vinyl ether compounds, diethyleneglycol divinyl ether, triethyleneglycol divinyl ether, cyclohexandiol divinyl ether, cyclohexane dimethanol divinyl ether is preferable in view of curability, substrate adhesion properties, odor and safety. Content of bis-vinyl ether compounds based on total ink is preferably 35 % by mass, more preferable 50 % or more by mass. In the case of 35 % or more by mass, sufficient flexibility and weather resistance can be obtained.

### <<Multi-vinyl ether compound having three or more vinyl ether groups>>

Specific example of the multi-vinyl ether compound having three or more vinyl ether groups preferable to the present invention include: trimethylolpropane trivinyl ether, ethyleneoxide modified trimethylolpropane trivinyl ether, pentaerythritol trivinyl ether, pentaerythritol tetravinyl ether, ethyleneoxide modified pentaerythritol trivinyl ether, ethyleneoxide modified pentaerythritol tetravinyl ether, dipentaerythritol hexavinyl ether, and ethyleneoxide modified dipentaerythritol hexavinyl ether.

As the multi-vinyl ether compound having three or more vinyl ether groups, compound having an oxyalkylene group in a molecule represented by Formula (I) is preferable, in view of compatibility with other compound or solubility, and substrate adhesion properties. Total numbers of oxyalkylene groups are preferably 10 or less. When the total numbers of oxyalkylene groups are 10 or more, water resistance of cured layer decreases. Even though Formula (I) exemplifies an oxyethylene group as an oxyalkylene group, an oxyethylene group having other number of carbon atoms can be applicable. Number of carbon atoms of an oxyethylene group is preferably 1 to 4, more preferably 1 or 2.

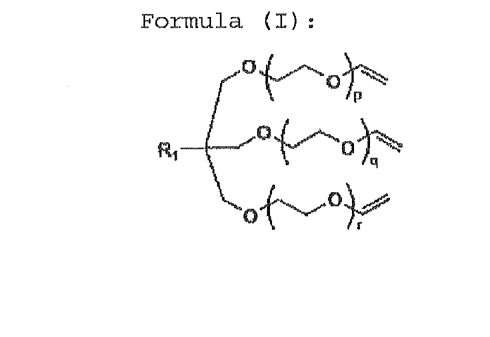

In Formula (I), R₁ represents a hydrogen atom or an organic group. Specific example of an organic group represented by Formula (I) include: alkyl group having 1 to 6 carbon atoms such as ethyl group, ethyl group, propyl group or butyl group; fluoroalkyl group having 1 to 6 carbon atoms, alkenyl group halving 1 to 6 carbon atoms such as furyl group or thienyl group, allyl group, 1-propenyl group, 2-propenyl group, 2-methyl-1-propenyl group, 2-methyl-2-propenyl group, 1-butenyl group, 2-butenyl group or 3-butenyl group; aryl group such as phenyl group, benzyl group, fluorobenzyl group, methoxybenzyl group or phenoxyethyl group; alkoxy group such as methoxy group, ethoxy group and butoxy group; alkyl carbonyl group having 1 to 6 carbon atoms such as propylcarbonyl group, butylcarbonyl group or pentylcarbonyl group; alkoxy carbonyl group having 1 to 6 carbon atoms such as ethoxycarbonyl group, propoxycarbonyl group or butoxycarbonyl group; and alkoxycarbamoyl group having 1 to 6 carbon atoms such as ethoxycarbamoyl group, propylcarbamoyl group or butylpentylcarbamoyl group, however be not particularly limited thereto. Among them, a hydrocarbon group except for a hetero atom is preferred as an organic group in view of curability. Further, p, q, r represent 0 or an integer of 1 or more, and p+q+r represent an integer of 3 to 10.

A multi-vinyl ether compound having four or more vinyl ether groups include a compound represented by Formula (II) and Formula (III).

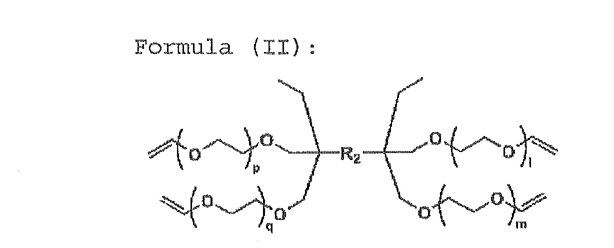

In Formula (II), R₂ represent a linking group comprising a methylene group or any one of alkylene group, oxyalkylene group and ester group each having 1 to 6 carbon atoms. p, q, 1 and m represent 0 or an integer of 1 or more, and p+q+l+m represent an integer of 3 to 10.

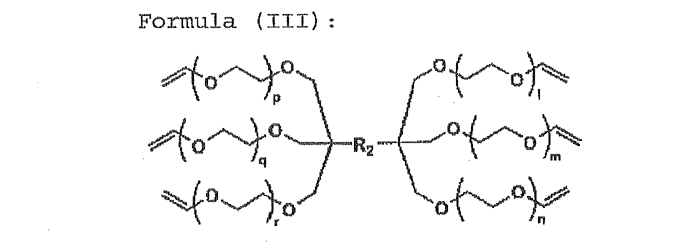

In Formula (III), R₂ represent a linking group comprising a methylene group or any one of alkylene group, oxyalkylene group and ester group each having 1 to 6 carbon atoms. p, q, r, l, m and n represent 0 or an integer of 1 or more, and p+q+r+l+m+n represent an integer of 3 to 10.

Even though Formula (II) and Formula (III) exemplify an oxyethylene group, an oxyalkylene group having other number of carbon atoms can be applicable. Number of carbon atoms of an oxyethylene group is preferably 1 to 4, more preferably 1 to 2.

According to the present invention, content of the multi-vinyl ether compound having three or more vinyl ether groups is preferably 35 to 70 % by mass based on ink, and more preferably 50 to 70 % by mass. The content is less than 35 % result in decrease of curing rate of overlapped ink, generation of odor, and deteriorations of physical properties in a cured layer such as solvent resistance or weather resistance. The content of 35 % or more result in desirable solvent resistance or weather resistance and the content of 70 % or less result in keeping enough ejection stability in ink-jet recording with small droplet and high driving frequency.

According to the present invention, compound having four or more vinyl ether groups is preferable as the multi-vinyl ether compound having three or more vinyl ether groups in view of obtaining excellent curability such as improving humidity dependence and solvent resistance and weather resistance of cured film.

Further vinyl ether group represented by Formula (IV) is preferably used as the above the multi-vinyl ether compound having three or more vinyl ether groups in view of improving curing sensitivity, humidity dependence and decreasing odor. 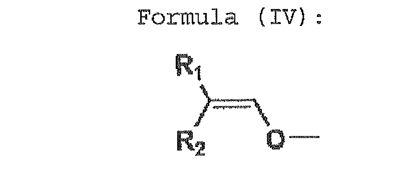 wherein R₁ and R₂ each represents a hydrogen atom and an organic group, and a total number of carbon atoms in the organic group represented by R₁ and R₂ is an integer of 1 or more. An organic group is defined as same as in Formula (I).

### [Monofunctional Vinyl ether compounds]

Vinyl ether compounds also suitably used are as follows:
n-Propyl vinyl ether, isopropyl vinyl ether, n-butyl vinyl ether, isobutyl vinyl ether, 2-ethylhexyl vinyl ether, octadecyl vinyl ether, cyclohexyl vinyl ether, allyl vinyl ether, hydroxyethyl vinyl ether, hydroxybutyl vinyl ether, 9-hydroxynonyl vinyl ether, 4-hydroxycyclohexyl vinyl ether, cyclohexane dimethanol monovinyl ether, and triethylene glycol monovinyl ether.

Other than the above, various types of vinyl ether compounds having been disclosed so far are applicable. Listed are, for example, the compounds containing a (meth)acryloyl group and a vinyl ether group in the molecule disclosed in Japanese Patent Publication No. 3461501; the vinyl ether compounds having an alicyclic skeleton containing at least an oxygen atom disclosed in Japanese Patent Publication No. 4037856; the vinyl ethers having an alicyclic skeleton disclosed in JP-A No. 2005-015396; 1-indanyl vinyl ether disclosed in JP-A No. 2008-137974; and 4-acetoxycyclohexyl vinyl ether disclosed in JP-A No. 2008-150341.

As a result of such diligent investigations, the following was found. An actinic energy radiation curable ink-jet ink, which comprise a Cationically polymerizable compound, a photo-cationic polymerization initiator and a radical polymerization inhibitor, wherein the cationically polymerizable compound comprises a compound having a vinyl ether group as a reactive group, the photo-cationic polymerization initiator is a photo acid generator, an amount of generation of protonic acid from the photo acid generator is 1 x 10⁻⁴ mol/L or less, has small yellowing of cured film and especially exhibits excellent sensitivity under high humid ambience.

A multi-functional vinyl ether (2 or more functional) of the present invention comprise a ring skeleton such as an alicyclic ring or aromatic ring. Monomer which is highly hydrophobic is preferred in view of low yellowing of film and excellent sensitivity under high humid ambience. Of these ring skeletons, alicyclic ring is especially preferred in view of superior sensitivity than aromatic ring which has UV absorption and in view of higher sensitivity due to lower hygroscopic under high humid ambience than alicyclic type of heterocyclic which contain hetero atom in a ring. Besides, in view of odor, alicyclic type is preferred.

Ring skeleton include: homocyclic alicyclic ring group such as cyclopentane ring, cyclohexane ring, dicyclohexane ring, dicyclopentadiene ring, norbornen ring and adamantane ring; homocyclic aromatic ring group such as benzene ring, naphthalene ring, biphenyl ring and pyrene ring; heterocyclic ring group such as epoxy ring, oxetane ring, thiophene ring, pyrrole ring, furan ring, pyridine ring, pyrrolidine ring, piperidine ring, piperazine ring, morpholine ring, dioxane ring, quinuclidine ring, tetrahydrofuran ring, aziridine ring, dithiane ring, pyrazole ring, triazol ring, imidazole ring, oxazole ring, thiazol ring, pyridone ring, quinolone ring, indole ring, benzotriazole ring, quinoline ring, isoquinoline ring, pyridazine ring, pyrimidine ring, pyrazine ring, thiadiazole ring, isooxazole ring and isothiazole ring.

Specific example of monomer having aromacyclic skeleton include, for example, hydroquinone divinyl ether and bisphenol A divinyl ether. Further linear or branched alkyl group and alkoxy group may be substituted to an aromatic ring thereof.

Specific example of monomer having heterocyclic skeleton include: oxetanemethanol divinyl ether, oxapentanediol divinyl ether, oxacyclohexanediol divinyl ether, oxanorbornanediol divinyl ether, oxanorbornanedimethanol divinyl ether, oxatricyclodecanediol divinyl ether, oxaadamantanediol divinyl ether and dioxolanmentanol divinyl ether. Further a monomer disclosed in Japanese Patent Publication 4037856 which has brigded skeleton of oxetane ring or hydrofuran ring can be usable.

Specific example of monomer having homocyclic alicyclic skeleton include: cyclopentanediol divinyl ether, cyclopentanedimethaol divinyl ether, tricyclodecanediol divinyl ether, tricyclodecanedimethanol divinyl ether, adamantanediol divinyl ether, cyclohexanediol divinyl ether, cyclohexanedimethanol divinyl ether, norbornyldimethanol divinyl ether and isobornyl divinyl ether.

Among them, in view of curing sensitivity, yellowing of cured film or odor, preferred is a monomer which has alicyclic skeleton and does not include a hetero atom such as cyclohexanediol divinyl ether, cyclohexanedimethanol divinyl ether, norbornyldimethanol divinyl ether, isobornyl divinyl ether, and more preferred is cyclohexanediol divinyl ether and cyclohexanedimethanol divinyl ether.

In view of curing sensitivity, turning yellow color of cured film, content of the vinyl ether having cyclic skeleton is preferably 35 % by mass or more. Further, in view of physical properties such as flexibility of cured film, preferred is an embodiment which contain vinyl ether both having cyclic skeleton and without having cyclic skeleton. In this case, vinyl ether compound without having cyclic skeleton include: n-propyl vinyl ether, isopropyl vinyl ether, n-butyl vinyl ether, isobutyl vinyl ether, 2-ethylhexyl vinyl ether, triethyleneglycol monovinyl ether, 1,4-butanediol divinyl ether, 1,6 -hexanediol divinyl ether, neopentylglycol divinyl ether, nonanediol divinyl ether, diethyleneglycol divinyl ether, triethyleneglycol divinyl ether (TEGDVE), trimethylolpropane divinyl ether, ethyleneoxide modified trimethylolpropane divinyl ether, ethyleneoxide modified trimethylolpropane trivinyl ether and pentaerythritol divinyl ether.

### (Other Cationically Polymerizable Compounds)

In the ink-jet ink of the present invention, together with a polymerizable compound having a vinyl ether group according to the present invention serving as a reactive group, another cationically polymerizable compound, for example, an epoxy compound or an oxetane compound can be used to the extent that the targeted effects of the present invention are not impaired.

### <Epoxy Compounds>

As epoxy compounds, any monomers, oligomers, and polymers commonly used for epoxy resins are usable. Specifically, well-known aromatic epoxides, alicyclic epoxides, and aliphatic epoxides are listed. Herein, the epoxides refer to monomers or oligomers thereof. These compounds may be used individually or in combinations of at least 2 types .

As the aromatic epoxides, listed are di- or polyglycidyl ethers produced via reaction of a polyphenol having at least one aromatic nucleus or an alkylene oxide adduct thereof with epichlorohydrin. For example, cited are di- or polyglycidyl ethers of bisphenol A or an alkylene oxide adduct thereof, di- or polyglycidyl ethers of hydrogenated bisphenol A or an alkylene oxide adduct thereof, and novolac-type epoxy resins. Herein, as the alkylene oxide, ethylene oxide and propylene oxide can be listed.

As the alicyclic epoxides, listed are cyclohexene oxide- or cyclopentene oxide-containing compounds obtained by epoxidizing compounds having at least one cycloalkane ring such as cyclohexene or cyclopentene using an appropriate oxidant such as hydrogen peroxide or a peracid. Specific examples thereof include, for example, Celloxide 2021, Celloxide 2021A, Celloxide 2021P, Celloxide 2080, Celloxide 2000, Epolead GT301, Epolead GT302, Epolead GT401, Epolead GT403, EHPE-3150, EHPEL 3150CE (produced by Daicel Chemical Industries, Ltd.); and UVR-6105, UVR-6110, UVR-6128, UVR-6100, UVR-6216, and UVR-6000 (produced by Union Carbide Corp.).

The aliphatic epoxides include, for example, di or polyglycidyl ethers of an aliphatic polyol or an alkylene oxide adduct thereof. Typical examples thereof include diglycidyl ethers of alkylene glycols such as ethylene glycol diglycidyl ether, propylene glycol diglycidyl ether, or 1,6-hexane diol diglycidyl ether; polyglycidyl ethers of polyols such as di- or triglycidyl ethers of glycerin or an alkylene oxide adduct thereof; and diglycidyl ethers of polyalkylene glycols such as diglycidyl ethers of polyethylene glycol or an alkylene oxide adduct thereof or diglycidyl ethers of polypropylene glycol or an alkylene oxide adduct thereof. Herein, as the alkylene oxides, ethylene oxide and propylene oxide can be listed.

Further, other than these compounds, monoglycidyl ethers of higher aliphatic alcohols and monoglycidyl ethers of phenol or cresol are usable. Of these epoxides, in view of quick curability, aromatic epoxides and alicyclic epoxides can be used. Of these, alicyclic epoxides are preferable.

Any of these epoxy compounds can be blended in an ink containing a vinyl ether compound according to the present invention in the range of 0 - 65 % by mass, more preferably 0 - 20 % by mass, which is preferable from the viewpoint of curability, cured film flexibility, and substrate adhesion properties.

### <Oxetane Compounds>

An oxetane compound is a compound having at least one oxetane (trimethylene oxide) ring in the molecule. Specifically, there can preferably used 3-ethyl-3-hydroxymethyloxetane (OXT101, produced by Toagosei Co., Ltd.), 1,4-bis[(3-ethyl-3-oxetanyl)methoxy-methyl]benzene (OXT121, produced by Toagosei Co. Ltd.), 3-ethyl-3-(phenoxymethyl)oxetane (OXT211, produced by Toagosei Co. Ltd.), di(1-ethyl-3-oxetanyl)methyl ether (OXT221, produced by Toagosei Co. Ltd.), 3-ethyl-3-(2-ethylhexyloxymethyl)oxetane (OXT212, produced by Toagosei Co. Ltd.), and di(1-methyl-3-oxetanyl)methyl ether. Specifically preferable are 3-ethyl-3-hydroxymethloxetane, 3-ethyl-3-(phenoxymethyl)oxetane, and di(1-ethyl-3-oxetanyl)methyl ether. These can be used individually or in combinations of at least 2 types. Any of these oxetane compounds can be blended in an ink containing a vinyl ether compound according to the present invention in the range of 0 - 65% by mass, which is preferable from the viewpoint of curability, cured film flexibility, and substrate adhesion properties.

In addition, as such a cationically polymerizable compound, a well-known cationically polymerizable cyclic compound may be contained, in addition to a vinyl ether compound, an epoxy compound, or an oxetane compound according to the present invention. Herein, in the present invention, a vinyl ether compound, an epoxy compound, and an oxetane compound according to the present invention, and also other cyclic compounds are referred to as cationically polymerizable compounds.

### <<Polymers or Oligomers>>

In the present invention, polymers or oligomers can be contained or added. As specific polymers or oligomers, of polymers or oligomers of the above cationically polymerizable compounds, in addition to those having no reactive group, those having excellent solubility with respect to a polymerizable compound, mainly a vinyl ether, according to the present invention can be used by selecting one from well-known polymers compatible with such a vinyl ether such as polyurethane-based compounds, poly(meth)acrylic acid (ester)-based compounds, polyester-based compounds, polystyrene-based compounds, polyvinyl acetate-based compounds, polybutadiene-based compounds, polybutylal-based compounds, or polyethylene-based compounds.

It is preferable that the solubility of a polymer or an oligomer with respect to the entire cationically polymerizable compound be at least 5% by mass at -15 °C and the viscosity be at least 500 mPa·s at 25 °C.

Addition of such a polymer or an oligomer makes it possible to obtain an ink exhibiting excellent continuous ejection stability during high frequency driving; realizing enhanced cured film flatness, and gloss and high image density; and forming an image excelling in substrate adhesion properties, flexibility, and weather resistance. These effects are markedly expressed specifically in black ink and white ink exhibiting relatively low transmission properties with respect to actinic energy radiation.

In case where the solubility of the polymer or oligomer is not at least 5% by mass based on the entire cationically polymerizable compound at -15 °C, when an ink is stored at a low temperature between about 0 °C and 10 °C, unfavorable generation of polymer gel or polymer precipitation results and at the same time, effects to enhance ink ejection stability, cured film flexibility, and weather resistance tend not to be produced.

To enhance solubility to the entire cationically Polymerizable compound, an ether structure such as an oxyethylene group or an oxypropylene group is allowed to be contained at least as a constituent element. Such a structure makes it possible to enhance solubility with respect to a vinyl ether and also solubility of a photopolymerization initiator, resulting in improved storage properties and curability of an ink.

Further, the viscosity of the polymer or oligomer is preferably at least 500 mPa·s at 25 °C, which, thereby, makes it possible to obtain an ink exhibiting excellent continuous ejection stability during high frequency driving; realizing enhanced cured film flatness, and gloss and high image density; and excelling in substrate adhesion properties, flexibility, and weather resistance. In the case of at most 500 mPa·s, adequate effects for substrate adhesion properties and weather resistance tend not to be expressed. The added amount of the polymer or oligomer is appropriately determined based on the viscosity and solubility, and is preferably 3 - 30% by mass based on the total ink mass, more preferably 5 - 20% by mass. When the added amount is less than 3% by mass, no above effects are produced. In the case of more than 30% by mass, effects to enhance ejection stability and ink storage stability at low temperatures tend not to be produced.

### <<Halogen Ions>>

In the ink-jet ink of the present invention, the content of a halogen ion is characterized to be 100 µg/g or less of the ink. The content is more preferably 40 µg/g or less of the ink, still more preferably 10 µg/g or less of the ink. When the content of the halogen ion exceeds 100 µg/g of the ink, curability, specifically, curing when a thin film is cured at low illuminance may become incomplete. The investigation of the present inventors made it clear that this phenomenon specifically occurred in an ink mainly employing a vinyl ether compound, compared to other cationically polymerizable compounds. Thereby, this phenomenon results in producing disadvantages such that solvent resistance and anti-abrasion properties of a film are weaken and weather resistance are degraded due to relatively low polymerization degree.

As the halogen ion, a fluorine ion, a chlorine ion, a bromine ion, and an iodine ion are listed, but a chlorine ion and a bromine ion specifically produce relatively large effects. Especially, effects produced by a chlorine ion are large. A chlorine ion and a bromine ion, especially a chlorine ion produces an adverse effect specifically on the above degradation of curability of an ink mainly employing a vinyl ether, resulting in degraded solvent resistance, anti-abrasion properties, and weather resistance. In order to allow the content of such halogen ions in an ink to be 100 µg/g or less of the ink, purification operations need to be sufficiently carried out to eliminate halogen ions contained in a cationically polymerizable compound, a colorant, a photo-cationic polymerization initiator, and other additives serving as raw materials. Especially when a pigment is used as a colorant, halogen ions are occasionally contained as impurities, to which therefore attention should be paid. Further, chlorine ions and bromine ions, significantly affecting an ink mainly employing a vinyl ether compound, are frequently incorporated in these raw materials as impurities. As a purification method to eliminate halogen ions from raw materials, various types of methods are employable depending on the forms and properties of the raw materials, including, for example, distillation for liquid polymerizable compounds, sublimation for solids, washing with ion-exchange water and drying, and use of an ion-exchange resin. On the other hand, as a method to add a halogen ion to an ink to allow the content to be 100 µg/g or less of the ink, cited is a method to add, directly or via previous dissolution in water or an organic solvent, an inorganic salt such as sodium chloride, potassium chloride, sodium bromide, or potassium bromide, or a quaternary ammonium salt such as tetramethylammonium chloride or tetramethylammonium bromide.

Determination of the halogen ion content in an ink is carried out as follows: an ink is stirred with pure water and halogen ions are extracted into the water phase, followed by elimination of the solids via filtration to perform quantitative analysis via ion chromatography. In a specific determination method, 1 g of an ink is precisely weighed and 30 ml of ultrapure water is added for stirring for 30 minutes, followed by standing for 1 hour and filtration, and then the resulting liquid after filtered is quantitatively analyzed via an ion chromatographic analysis method to determine the extracted halogen ion amount per g of the ink (µg/g of the ink).

### <<Colorants>>

When the ink-jet ink of the present invention is colored, a pigment is preferably used as a colourant. As the pigment, carbon black, colorless inorganic pigments such as titanium oxide or calcium carbonate, or colored organic pigments are usable. The organic pigments include insoluble azo pigments such as Toluidino Red, Toluidino Maroon, Hanza Yellow, Benzidine Yellow, or Pyrazolone Red; soluble azo pigments such as Lithol Red, Helio Bordeaux, Pigment Scarlet, or Permanent Red 2B; derivatives from vat dyes such as alizarin, indanthrone, or Thioindigo Maroon; phthalocyanine-based organic pigments such as Phthalocyanine Blue or Phthalocyanine Green; quinacridone-based organic pigments such as Quinacridone Red or Quinacridone Magenta; perylene-based organic pigments such as Perylene Red or Perylene Scarlet; isoindolinone-based organic pigments such as Isoindolinone Yellow or Isoindolinone Orange; pyranthrone-based organic pigments such as Pyranthrone Red or Pyranthrone Orange; thioindigo-based organic pigments; condensed azo-based organic pigments; benzimidazolone-based organic pigments; quinophtharone-based organic pigments such as Quinophthalone Yellow; isoindoline-based organic pigments such as Isoindoline Yellow; and as other pigments, Flavanthrone Yellow, Acylamide Yellow, Nickel Azo Yellow, Copper Azomethine Yellow, Perynone Orange, Anthrone Orange, Dianthraquinonyl Red, and Dioxazine Violet.

Such organic pigments are exemplified with Color Index (C.I.) numbers as follows:
C.I. Pigment Yellow 12, 13, 14, 17, 20, 24, 74, 83, 86, 93, 109, 110, 117, 120, 125, 128, 129, 137, 138, 139, 147, 148, 150, 151, 153, 154, 155, 166, 168, 180, and 185;
C.I. Pigment Orange 16, 36, 43, 51, 55, 59, and 61;
C.I. Pigment Red 9, 48, 49, 52, 53, 57, 97, 122, 123, 149, 168, 177, 180, 192, 202, 206, 215, 216, 217, 220, 223, 224, 226, 227, 228, 238, and 240;
C.I. Pigment Violet 19, 23, 29, 30, 37, 40, and 50;
C.I. Pigment Blue 15, 15:1, 15:3, 15:4, 15:6, 22, 60, and 64;
C.I. Pigment Green 7 and 36; and
C.I. Pigment Brown 23, 25, and 26.

Of the above pigments, due to excellent light stability, preferable are quinacridone-based organic pigments, phthalocyanine-based organic pigments, benzimidazolone-based organic pigments, isoindolinone-based organic pigments, condensed azo-based organic pigments, quinophtharone-based organic pigments, and isoindoline-based organic pigments.

An organic pigment is preferably in the form of fine particles, having an average particle diameter of 10 - 150 nm in an ink as a determined value via laser scattering. When the average particle diameter of the pigment is less than 10 nm, light stability decreases due to the decreased particle diameter. In the case of more than 150 nm, it becomes difficult to maintain dispersion stability and then the pigment tends to precipitate and also ejection stability decreases, resulting in the problem of occurrence of fine mists referred to as satellites. However, in the case of titanium oxide, to provide whiteness and opacifying properties, average particle diameter is allowed to be 150 - 300 nm, preferably 180 - 250 nm.

Further, coarse particles are preferably eliminated via adequate dispersion or filtration so as for the maximum particle diameter of a pigment in an ink not to exceed 1.0 µm. The presence of such coarse particles also degrades ejection stability.

To allow an organic pigment to be fine, the following method is performed: namely, a mixture containing at least 3 components of an organic pigment, a water-soluble inorganic salt of at least 3 factors by mass of the amount of the organic pigment, and a water-soluble solvent is formed into clay, which then is strongly kneaded to form fine sizes, followed by being placed into water to give a slurry form by stirring using a high speed mixer; and then the slurry is repeatedly filtered and washed to eliminate the water-soluble inorganic salt and the water-soluble solvent via aqueous treatment. In such a process to prepare fine-sized particles, any appropriate resin and pigment dispersant may be added.

As the water-soluble inorganic salt, sodium chloride and potassium chloride are listed. Any of these inorganic salts are used in the range of 3 - 20 factors by mass of the amount of an organic pigment. After dispersion treatment, to realize the halogen ion content specified in the present invention, chlorine ions (halogen ions) are eliminated via washing treatment. When the amount of the inorganic salt is less than 3 factors by mass, a treated pigment is unable to be obtained at a desired size. In contrast, in the case of more than 20 factors by mass, enormous washing treatment in the post-process is required, resulting in a substantially small treatment amount of the organic pigment.

A water-soluble solvent makes it possible to produce an appropriate clay state of an organic pigment and a water-soluble inorganic salt used as a pulverizing aid which is employed to efficiently carry out adequate pulverization. The solvent is not specifically limited if being a water-soluble solvent. However, since temperature elevation during kneading allows the solvent to easily evaporate, a solvent of a boiling point of 120 - 250 °C is preferable from the viewpoint of safety. Such a water-soluble solvent includes 2-(methoxymethoxy)ethanol, 2-butoxyethanol, 2-(i-pentyloxy)ethanol, 2-(hexyloxy)ethanol, diethylene glycol, diethylene glycol monomethyl ether, diethylene glycol monoethyl ether, diethylene glycol monobutyl ether, triethylene glycol, triethylene glycol monomethyl ether, liquid polyethylene glycol, 1-methoxy-2-propanol, 1-ethoxy-2-propanol, dipropylene glycol, dipropylene glycol monomethyl ether, dipropylene glycol monoethyl ether, and low molecular weight polypropylene glycol.

Further, to accelerate adsorption of a pigment dispersant to the surface, a pigment is preferably surface-treated via a well-known technology using acidic treatment, basic treatment, a synergist, or various types of coupling agents, from the viewpoint of ensuring dispersion stability.

To realize adequate density and light stability, the pigment is preferably contained at 1.5 - 8% by mass in the case of a color except white in an ink-jet ink and at 10-30% by mass in a white ink employing titanium oxide.

### «Pigment Dispersants»

As pigment dispersants, listed are a hydroxyl group-containing carboxylic acid ester, a salt of a long-chain polyaminoamide and a high molecular weight acid ester, a salt of a high molecular weight polycarboxylic acid, a salt of a long-chain polyaminoamide and a polar acid ester, a high molecular weight unsaturated acid ester, a copolymer, a modified polyurethane, a modified polyacrylate, a polyether ester-type anionic surfactant, a naphthalenesulfonic acid formalin condensate salt, an aromatic sulfonic acid formalin condensate salt, a polyoxyethylene alkyl phosphoric acid ester, a polyoxyethylene nonylphenyl ether, stearyl amine acetate, and a pigment derivative.

Specific examples of the dispersants include "Anti-Terra-U (a polyaminoamide phosphoric acid salt)," "Anti-Terra-203/204 (a high molecular weight polycarboxylic acid salt)," "Disperbyk-101 (a polyaminoamide phosphoric acid salt and an acid ester), 107 (a hydroxyl group-containing carboxylic acid ester), 110 (an acid group-containing copolymer), 130 (a polyamide), 161, 162, 163, 164, 165, 166, and 170 (a copolymer)," "400," "Bykumen (a high molecular weight unsaturated acid ester)," "BYK-P104, P105 (a high molecular weight unsaturated acid polycarboxylic acid)," "P104S, 240S (a high molecular weight unsaturated acid polycarboxylic acid and a silicon-base)," and "Lactimon (a long-chain amine, an unsaturated acid polycarboxylic acid, and silicon)" (produced by BYK Chemie GmbH).

Further, listed are "Efka 44, 46, 47, 48, 49, 54, 63, 64, 65, 66, 71, 701, 764, and 766" and "Efka Polymer 100 (a modified polyacrylate), 150 (an aliphatic modified polymer), 400, 401, 402, 403, 450, 451, 452, 453 (a modified polyacrylate), and 745 (a copper phthalocyanine-base)" (produced by Efka Chemicals Co.); "Flowlen TG-710 (a urethane oligomer)," "Flownon SH-290 and SP-1000," and "Polyflow No. 50E and No. 300 (an acrylic copolymer)" (produced by Kyoeisha Chemicals Co., Ltd.); and "Disparlon KS-860, 873SN, and 874 (a polymer dispersant), #2150 (an aliphatic polycarboxylic acid), and #7004 (a polyether ester-type)" (produced by Kusumoto Chemicals, Ltd.).

Still further, listed are "Demol RN, N (a naphthalenesulfonic acid formalin condensate sodium salt), MS, C, SN-B (an aromatic sulfonic acid formalin condensate sodium salt), and EP," "Homogenol L-18 (a polycarboxylic acid-type polymer)," "Emulgen 920, 930, 931, 935, 950, and 985 (a polyoxyethylene nonyl phenyl ether)," and "Acetamin 24 (a coconut amine acetate) and 86 (a stearylamine acetate)" (produced by Kao Corp.); "Solsperse5000 (a phthalocyanine ammonium salt-base), 13240, 13940 (a polyester amine-base), 17000 (a fatty acid amine-base), 24000, 32000, and "7000" (produced by Zeneca Co.); "Nikkol T106 (a polyoxyethylene sorbitan monooleate)," "MYS-IEX (a polyoxyethylene monostearate)," and "Hexagline 4-0 (a hexaglyceryl tetraoleate)" (produced by Nikko Chemicals Co., Ltd.); and "AJISPER 821, 822, and 824" (produced by Ajinomoto Fine-Techno Co., Inc).

These pigment dispersants are preferably contained at 5 - 70% by mass based on 100% by mass of a pigment, more preferably 10 - 50% by mass. In the case of more than 5%, good dispersion stability is realized and in the case of less than 70% by mass, good ejection stability is kept.

Further, these pigment dispersants preferably exhibit a solubility of at least 5% by mass at 0 °C with respect to the entire cationically polymerizable compound. In cases where the solubility is at least 5% by mass, when an ink is stored at a low temperature, unfavorable polymer gel or an unfavorable soft aggregate of a pigment is difficult to generated, resulting in better ink storage stability and ejection stability.

In cases where the solubility is less than 5% by mass, when an ink is stored at a low temperature between about 0 °C and 10 °C, unfavorable polymer gel or an unfavorable soft aggregate of a pigment is generated, resulting in degraded ink storage stability and ejection stability.

### «Radical Polymerization Inhibitors»

In the ink of the present invention, it is characterized to add a radical polymerization inhibitor.

It was found that in ink-jet ink having a cationically polymerizable compound having vinyl ether group, a very small quantity of a photo polymerization initiator is decomposed to generate a radical compound during ink storage. This polymerization occurs due to the radical compound. The compound produced by the polymerization results in increasing ink viscosity and deterioration of nozzle ink repellency and finally causing poor ejecting from ink-jet head.

Therefore a radical polymerization inhibitor is used to inhibit this polymerization reaction particular to vinyl ether compound. Addition of radical polymerization inhibitor to other well-known cationically polymerizable compound such as oxetane compound or epoxy compound does not result in so much inhibition effect as being obtained by using vinyl ether compound described here.

As the radical polymerization inhibitor, listed are a phenol-based hydroxyl group-containing compound, quinones such as methoquinone(hydroquinone monomethyl ether), hydroquinone, 4-methoxy-1-naphthol; a hindered amine-based anti-oxidant, free radical compounds such as 1,1-diphenyl-2-picrylhidrazyl free radical, an N-oxide free radical compound; a nitrogen-containing heterocyclic mercapto-based compound, a thioether-based anti-oxidant, a hindered phenol-based anti-oxidant, an ascorbic acid, zinc sulfate, a thiocyanic acid salt, a thiourea derivative, various sugars, a phosphoric acid-based anti-oxidant, a nitrous acid salt, a sulfurous acid salt, a thiosulfuric acid salt, a hydroxylamine derivative, an aromatic amine, phenylene diamines, imines, sulfonamides, a urea derivative, an oximes, a polycondensate of a dicyandiamide and a polyalkylenepolyamine, a sulfur-containing compound such as phenothiazine, a complexing agent based on tetraazaannulene (TAA) and hindered amines.

As the radical polymerization inhibitor, specifically, the following compounds can be listed.

Phenol-based hydroxyl group-containing compounds are, for example, phenol, an alkyl phenol such as o-, m-, or p-cresol (methylphenol), 2-t-butyl-4-methylphenol, 6-t-butyl-2,4-dimethylphenol, 2,6-di-t-butyl-4-methylphenol, 2-t-butylphenol, 4-t-butylphenol, 2,4,-di-t-butylphenol, 2-methyl-4-t-butylphenol, 4-t-butyl-2,6-dimethylphenol, or 2,2'-methylene-bis-(6-t-butyl-methylphenol), 4,4'-oxydiphenyl, 3,4-methylenedioxydiphenol (sesame oil), 3,4-dimethylphenol, benzcatechin (1,2-dihydroxybenzene), 2-(1'-mehtylcyclohex-1'-yl)-4,6-dimethylphenol, 2- or 4-(1'-phenyleth-1'-yl)phenol, 2-t-butyl-6-methylphenol, 2,4,6-tris-t-butylphenol, 2,6-di-t-butylphenol, nonylphenol [CAS No. 11066-49-2], octylphenol [CAS No. 140-66-9], 2,6-dimethylphenol, bisphenol A, bisphenol B, bisphenol C, bisphenol F, bisphenol S, 3,3',5,5'-tetrabromobisphenol A, 2,6-di-t-butyl-p-cresol, Koresin (produced by BASF Aktiengesellschaft), methyl 3,5-dit-butyl-4-hydroxybenzoate, 4-t-butylbeozocatechin, 2-hydroxybenzyl alcohol, 2-methoxy-4-methylphenol, 2,3,6-trimethylphenol, 2,4,5-trimethylphenol, 2,4,6-trimethylphenol, 2-isopropylphenol, 4-isopropylphenol, 6-isopropyl-m-cresol, n-octadecyl-β-(3,5-di-t-butyl-4-hydroxyphenyl)propionate, 1,1,3-tris-(2-methyl-4-hydroxyl-5-t-butylphenyl)butane, 1,3,5-trimethyl-2,4,6-tris-(3,5-di-t-butyl-4-hydroxybenzyl)benzene, 1,3,5-tris-(3,5-di-t-butyl-4-hydroxybenzyl)isocyanurate, 1,3,5-tris-(3,5-di-t-butyl-4-hydroxyphenyl)propionyloxyethyl-isocyanurate, 1,3,5-tris-(2,6-dimethyl-3-hydroxy-4-t-butylbenzyl)isocyanurate, pentaerythrit-tetrakis-[β-(3,5-di-t-butyl-4 hydroxphenyl)propionate], 2,6-di-t-butyl-4-dimethylaminomethylphenol, 6-s-butyl-2,4-dinitrophenol, Irganox 565, 1010, 1076, 1141, 1192, 1222, and 1425 (produced by Firma Ciba Spezialitaetenchemie), octadecyl 3-(3',5'-di-t-butyl-4'-hydroxyphenyl)propionate, hexadecyl 3-(3',5'-di-t-butyl-4'-hydroxyphenyl)propionate, octyl 3-(3',5'-di-t-butyl-4'-hydroxyphenyl)propionate, 3-thia-1,5-pentanediol-bis-[(3',5'-di-t-butyl-4'-hydroxyphenyl)propionate], 4,8-dioxa-1,11-undecanediol-bis[(3',5'-di-t-butyl-4'-hydroxyphenyl)propionate], 4,8-dioxa-1,11-undecanediol-bis-[(3'-t-butyl-4'-hydroxy-5'-methylphenyl)propionate], 1,9-nonanediol-bis[(3',5'-di-t-butyl-4'-hydroxyphenyl)propionate], 1,7-heptanediamine-bis[3-(3',5'-di-t-butyl-4'-hydroxyphenyl)propionamide], 1,1-methanediamine-bis[3-(3',5'-di-t-butyl-4'-hydroxyphenyl)propionamide], 3-(3',5'-di-t-butyl-4'-hydroxyphenyl)propionic acid hydrazide, 3-(3',5'-dimethyl-4'-hydroxyphenyl)propionic acid hydrazide, bis-(3-t-butyl-5-ethyl-2-hydroxyphen-1-yl)methane, bis-(3,5-di-t-butyl-4-hydroxyphen-l-yl)methane, bis-[3-(1'-methylcyctohex-1'-yl)-5-methyl-2-hydroxyphen-1-yl]methane, bis-(3-t-butyl-2-hydroxy-5-methylphen-1-yl)methane, 1,1-bis-(5-t-butyl-4-hydroxy-2-methylphen-1-yl)ethane, bis-(5-t-butyl-4-hydroxy-2-methylphen-1-yl)sulfide, bis-(3-t-butyl-2-hydroxy-5-methylphen-1-yl)sulfide, 1,1-bis-(3,4-dimethyl-2-hydroxyphen-1-yl)-2-methylpropane, 1,1-bis-(5-t-butyl-3-methyl-2-hydroxyphen-1-yl) butane, 1,3,5-tris-[1'-(3",5"-di-t-butyl-4"-hydroxyphen-1"-yl)meth-1'-yl]-2,4,6- trimethylbenzene, 1,1,4-tris-(5'-t-butyl-4'-hydroxy-2'-methylphen-1'-yl)butane, t-butylcatechol, an aminophenol such as p-aminophenol, a nitrosophenol such as p-nitrosophenol or p-nitroso-o-cresol, an alkoxyphenol such as 2-methoxyphenol (guaiacol, benzcatechin monomethyl ether), 2-ethoxyphenol, 2-isopropoxyphenol, 4-methoxyphenol (hydroquinone monomethyl ether), or mono- or di-t-butyl-4-methoxyphenol, 3,5-di-t-butyl-4-hydroxyanisole, 3-hydroxy-4-methoxybenzyl alcohol, 2,5-dimethoxy-4-hydroxybenzyl alcohol (syringa alcohol), 4-hydroxy-3-methoxybenzaldehyde (vanillin), 4-hydroxy-3-ethoxybenzaldehyde (ethylvanillin), 3-hydroxy-4-methoxybenzaldehyde (isovanillin), 1-(4-hydroxy-3-methoxyphenyl)ethanone (acetovanillone), eugenol, dihydroeugenol, isoeugenol, a tocopherol such as α-, β-, γ-, δ- and ε-tocopherol, tocol, α-tocopherolhydroquinone, and 2,3-dihydro-2,2-dimethyl-7-hydroxybenzofuran (2,2-dimethyl-7-hydroxycoumarane).

Further, quinones and hydroquinones include, for example, hydroquinone, hydroquinone monomethyl ether (4-methoxyphenol), methylhydroquinone, 2,5-di-t-butylhydroquinone, 2-methyl-p-hydroquinone, 2,3-dimethylhydroquinone, trimethylhydroquinone, 4-methylbezcatechin, t-butylhydroquinone, 3-methylbenzcatechin, benzoquinone, 2-methyl-p-hydroquinone, 2,3-dimethylhydroquinone, trimethylhydroquinone, t-butylhydroquinone, 4-ethoxyphenol, 4-butoxyphenol, hydroquinone monobenzyl ether, p-phenoxyphenol, 2-methylhydroquinone, tetramethyl-p-benzoquinone, diethyl-1,4-cyclohexanedione-2,5-dicarboxylate, phenyl-p-benzoquinone, 2,5-dimethyl-3-benzyl-p-benzoquinone, 2-isopropyl-5-methyl-p-benzoquinone (thymoquinone), 2,6-diisopropyl-p-benzoquinone, 2,5-dimethyl-3-hydroxy-p-benzoquinone, 2,5-dihydroxy-p-benzoquinone, embelin, tetrahydroxy-p-benzoquinone, 2,5-dimethoxy-1,4-benzoquinone, 2-amino-5-methyl-p-benzoquinone, 2,5-bisphenylamino-1,4-benzoquinone, 5,8-dihydroxy-1,4-naphthoquinone, 2-anilino-1,4-naphthoquinone, anthraquinone, N,N-dimethylindoaniline, N,N-diphenyl-p-benzoquinonediimine, 1,4-benzoquinonedioxime, cerulignone, 3,3'-di-t-butyl-5,5'-dimethyldiphenoquinone, p-rosolic acid (aurin), 2,6-di-t-butyl-4-benzylidenebenzoquinone, and 2,5-di-t-butylamylhydroquinone.

Still further, as N-oxyls (compounds containing a nitroxyl- or N-oxyl group, or at least one >N-O- group), preferable are, for example, 4-hydroxy-2,2,6,6-tetramethylpiperidine-N-oxyl, 4-oxo-2,2,6,6-tetramethyl-piperidine-N-oxyl, 4-methoxy-2,2,6,6-tetramethyl-piperidine-N-oxyl, 4-acetoxy-2,2,6,6-tetramethyl-piperidine-N-oxyl, 2,2,6,6-tetramethyl-piperidine-N-oxyl, Uvinul 4040P (produced by BASE Aktiengesellschaft), 4,4',4"-tris-(2,2,6,6-tetramethylpiperidine-N-oxyl)phosphite, 3-oxo-2,2,5,5-tetramethyl-pyrrolidine-N-oxyl, 1-oxyl-2,2,6,6-tetramethyl-4-methoxypiperidine, 1-oxyl-2,2,6,6-tetramethyl-4-trimethylsilyloxypiperidine, 1-oxyl-2,2,6,6-tetramethylpiperidin-4-yl-2-ethylhexanoate, 1-oxyl-2,2,6,6-tetramethylpiperidin-4-yl-sebacate, 1-oxyl-2,2,6,6-tetramethylpiperidin-4-yl-stearate, 1-oxyl-2,2,6,6-tetramethylpiperidin-4-yl-benzoate, 1-oxyl-2,2,6,6-tetramethylpiperidin-4-yl-(4-t-butyl)benzoate, bis-(1-oxyl-2,2,6,6-tctramethylpiperidin-4-yl)succinate, bis-(1-oxyl-2,2,6,6-tetramethylpiperidin-4-yl)adipate, bis-(1-oxyl-2,2,6,6-tetramethylpiperidin-4-yl) 1,10-decanedioate, bis-(1-oxyl-2,2,6,6-tetramethylpiperidin-4-yl)n-butylmalonate, bis-(1-oxyl-2,2,6,6-tetramethylpiperidin-4-yl)phthalate, bis-(1-oxyl-2,2,6,6-tetramethylpiperidin-4-yl)isophthalate, bis-(1-oxyl-2,2,6,6-tetramethylpiperidin-4-yl)terephthalate, bis-(1-oxyl-2,2,6,6-tetramethylpiperidin-4-yl)hexahydroterephthalate, N,N'-bis-(1-oxyl-2,2,6,6-tetramethylpiperidin-4-yl)adipamide, N-(1-oxyl-2,2,6,6-tetramethylpiperidin-4-yl)caprolactam, N-(1-oxyl-2,2,6,6-tetramethylpiperidin-4-yl)dodecylsuccinimide, 2,4,6-tris-[N-butyl-N-(1-oxyl-2,2,6,6-tetramethylpiperidin-4-yl]triazine, N,N'-bis-(1-oxyl-2,2,6,6-tetramethylpiperidin-4-yl)-N,N'-bis-formyl-1,6-diaminohexane, and 4,4'-ethylene-bis-(1-oxyl-2,2,6,6-tetramethylpiperazin-3-one).

As aromatic amines or phenylenediamines, preferable are, for example, N,N-diphenylamine, N-nitroso-diphenylamine, nitrosodiethylaniline, p-phenylenediamine, an N,N'-dialkyl-p-phenylenediamine (herein the alkyl groups may be the same or differ and each may be independent, being straight-chained or branched having 1 - 4 carbon atoms) such as N,N'-di-isobutyl-p-phenylenediamine, or N,N'-di-isopropyl-p-phenylenediamine, Irganox 5057 (produced by Firma Ciba Spezialitaetenchemie), N-phenyl-p-phenylenediamine, N,N'-diphenyl-p-phenylenediamine, N-isopropyl-N-phenyl-p-phenylenediamine, N,N'-di-s-butyl-p-phenylenediamine (Kerobit BPD produced by BASF Aktiengesellschaft), N-phenyl-N'-isopropyl-p-phenylenediamine (Vulkanox 4010 produced by Bayer AG), N-(1,3-dimethylbutyl)-N'-phenyl-p-phenylenediamine, N-phenyl-2-naphthylamine, iminodibenzyl, N,N'-diphenylbenzidine, N-phenyltetraaniline, acridone, 3-bydroxydiphenylamine, and 4-hydroxydiphenylamine.

Imines include, for example, methylethylimine, (2-hydroxyphenyl)benzoquinonimine, (2-hydroxyphenyl)benzophenonimine, N,N-dimethylindoaniline, thionine(7-amino-3-imino-3H-phenothiazine), and Methylene Violet (7-dimethylamino-3-phenothiazinone).

Sulfonamides effective as a radical polymerization inhibitor include, for example, N-methyl-4-toluenesulfonamide, N-t-butyl-4-toluenesulfonamide, N-t-butyl-N-oxyl-4-toluenesulfonamide, N,N'-bis(4-sulfanilamide)piperidine, and 3-{[5-(4-aminobenzoyl)-2,4-dimethylbenzenesulfonyl]ethylamino}-4-methylbenzenesulfonic acid.

Oximes effective as a radical polymerization inhibitor include, for example, aldoximes, ketoximes, or amidoximes, preferably diethyl ketoxime, acetoxime, methyl ethyl ketoxime, cylcohexanone oxime, benzaldehyde oxime, benzyl dioxime, dimethylglyoxime, 2-pyridinaldoxime, salicylaldoxime, phenyl-2-pyridyl ketoxime, 1,4-benzoquinone dioxime, 2,3-butanedione dioxime, 2,3-butanedione monooxime, 9-fluorenone oxime, 4-t-butyl-cyclohexanone oxime, ethyl N-ethoxy-acetimidate, 2,4-dimethyl-3-pentanone oxime, cyclododecanone oxime, 4-heptanone oxime, and di-2-furanylethanedione dioxime, or other aliphatic or aromatic oximes or alkyl transfer reagents such as alkyl halides, triflates, sulfonates, tosylates, carbonates, sulfates, or phosphates, as well as reaction products thereof.

Hydroxylamines include, for example, N,N-diethylhydroxylamine and the compounds described in the International Application Publication of PCT/EP 03/03139.

As urea derivatives, for example, urea or thiourea is suitable.

Phosphor-containing compounds include, for example, triphenylphosphine, triphenyl phosphite, hypophosphorous acid, trinonyl phosphite, triethyl phosphite, and diphenylisopropylphosphine.

As sulfur-containing compounds, suitable are, for example, diphenyl sulfide, phenothiazine, and sulfur-containing natural substances such as cysteine.

Complexing agents based on tetraazaannulene (TAA) include, for example, dibenzotetraaza[14] rings and porphyrins as listed in Chem. Soc. Rev., 1998, 27, 105 - 115.

Hindered amines include: bis(2,2,6,6-tetramethyl-4-pyperyzyl)cebacate, poly{[6-(1,1,3,3-tetramethylbutyl)imino-1,3,5-triazine-2,4-diyl][(2,2,6,6- tetramethyl-4-pyperyzyl)imino]hexamethylene[(2,2,6,6-tetramethyl-4-pyperyzyl)imino]}, tetrakis(2,2,6,6-tetramethyl-4-pyperyzyl)-1,2,3,4-butanetetracarboxylate, 2,2,6,6-tetramethyl-4-pyperyzyl benzoate, (mixed 2,2,6,6-tetramethyl-4-pyperyzyl/tridecyl)-1,2,3,4-butanetetracarboxylate, mixed {2,2,6,6-tetramethyl-4-pyperyzyl/β,β.β',β'-tetramethyl-3-9-[2,4,8,10-tetraoxaspiro(5,5)undecane]diethyl}-1,2,3,4-butanetetracarboxylate, poly{[6-N-morphoryl-1,3,5-triaine-2,4-diyl][ (2,2,6,6-tetramethyl-4-pyperyzyl)imino]hexamethylene[(2,2,6,6-tetramethyl-4-pyperyzyl)imino], and [N-(2,2,6,6-tetramethyl-4-pyperyzyl)-2-methyl-2-(2,2,6,6-tetramethyl-4-pyperyzyl)imino]propionamide. Products on the market include LA-77, LA-57, LA-67 (products by ADEKA), TINUVIN 123 and TINUVIN 152 (products of Ciba Japan).

In addition, listed are metal (copper, manganese, cerium, nickel, and chromium) salts such as carbonates, chlorides, dithiocarbamates, sulfates, salicylates, acetates, stearates, and ethylhexanoates.

Further, an N-oxyl free radical compound having a vinyl ether functional group, as described in Macromol. Rapid Commun., 28, 1929 (2007), is structured so as to have both a cationically polymerizable function and a radical trapping function in the same molecule and therefore preferably added to the ink of the present invention from the viewpoint of curability and ink storage stability. Still further, a polymer obtained via cationic polymerization of such an N-oxyl free radical compound having a vinyl ether functional group is a polymer having a structure with free radicals in its side chains and therefore preferably added to the ink of the present invention in view of cured film physical properties such as solvent resistance, anti-abrasion properties, or weather resistance, or ink storage stability.

Of these compound above, in view of storage stability which is one of the object and effect of the present invention, namely in view of increasing viscosity via polymerization of vinyl ether compound or deterioration of nozzle ink repellency, preferred is phenols, N-oxyl free radical compounds, 1,1-diphenyl-2-picrylhydrazy free radivcal, phenothiazine, quinones and hindered amines, and most preferred is N-oxyl free radical compounds.

The added amount of a radical polymerization inhibitor is preferably 1 - 5000 ppm of the ink, more preferably 10 - 2000 ppm of the ink. In the case of at least 1 ppm of the ink, desired storage stability is realized, and then increased viscosity of the ink and liquid repellency to the ink-jet nozzles can be realized, which is preferable from the viewpoint of ejection stability. Further, in the case of at most 5000 ppm of the ink, the acid generating efficiency of a polymerization initiator is not impaired, resulting in maintaining high curing sensitivity.

### «Cationic Polymerization Inhibitors»

In the ink of the present invention, a cationic polymerization inhibitor can also be added. As such a cationic polymerization inhibitor, alkali metal compounds and /or alkaline earth metal compounds or amines can be listed.

As the amines, preferably listed are alkanolamines, N,N'-dimethylalkylamines, N,N'-dimethylalkenylamines, N,N'-dimethylalkynylamines including specifically triethanolamine, triisopropanolamine, tributanolamine, N-ethyldiethanolamine, propanolamine, n-butylamine, sec-butylamine, 2-aminoethanol, 2-methylaminoethanol, 3-methylamino-1-propanol, 3-methylamino-1,2-propanediol, 2-ethhylaminoethanol, 4-ethylamino-1-butanol, 4-(n-butylamino)-1-butanol, 2-(t-butylamino)ethanol, N,N-dimethylundecanol, N,N-dimethyldodecanolamine, N,N-dimethyltridecanolamine, N,N-dimethyltetradecanolamine, N,N-dimethylpentadecanolamine, N,N-nonadecylamine, N,N-dimethylicosylamine, N,N-dimethyleicosylamine, N,N-dimethylhenicosylamine, N,N-dimethyldocosylamine, N,N-dimethyltricosylamine, N,N-dimethyltetracosylamine, N,N-dimethylpentacosylamine, N,N-dimethylpentanolamine, N,N-dimethylhexolamine, N,N-dimethylheptanolamine, N,N-dimethyloctanolamine, N,N-dimethylnonanolamine, N,N-dimethyldecanolamine, N,N-dimethylnonylamine, N,N-dimethyldecylamine, N,N-dimethylundecylamine, N,N-dimethyldodecylamine, N,N-dimethyltridecylamine, N,N-dimethyltetradecylamine, N,N-dimethylpentadecylamine, N,N-dimethylhexadecylamine, N,N-dimethylheptadecylamine, or N,N-dimethyloctadecylamine. Other than these, quaternary ammonium salts can also be used. Especially, secondary amine is preferable as a cationic polymerization inhibitor.

The added amount of a cationic polymerization inhibitor is preferably 10 - 5000 ppm of the ink. In the case of at least 10 ppm of the ink, desired storage stability is realized, and then increased viscosity of the ink and liquid repellency to the ink-jet nozzles can be realized, which is preferable from the viewpoint of ejection stability. Further, in the case of at most 5000 ppm of the ink, the acid generating efficiency of a polymerization initiator is not impaired, resulting in maintaining high curing sensitivity.

### «Photo-cationic Polymerization Initiators»

As a photo-cationic polymerization initiator usable for the ink of the present invention, well-known photo acid generators can be used. The present invention is characterized to use a photo acid generator generating an amount of thermo acid 1 x 10⁻⁴ mol/L or less.

An amount of generation of protonic acid is defined as a difference of a hydrogen ion concentration (mol/L) in a dioxane solution between immediately after preparation and after refluxing when 0.02 mol/L of the photo acid generator in the dioxane solution are refluxed 20 hours under atmospheric pressure.

An amount of generation of protonic acid from a photo acid generator is specifically determined based on the following method.
(1) A dioxane solution of 0.02 mol/L of a photo acid generator is refluxed for 20 hours.
(2) With regard to solutions before and after reflux treatment, 1 g of each solution and 4 g of pure water are mixed, is still standing 30 minutes in a glass bottle with airtight stopper and then the pH of the water layer being a supernatant solution is determined. A temperature of the pH measured solution is kept from 24 °C or more to 26 °C or less.
(3) [H⁺] concentrations before and after reflux treatment are calculated based on the pH determination results and then the difference of [H⁺] concentration before reflux treatment - [H⁺] concentration after reflux treatment is designated as an amount of generation of protonic acid.

To use a photo acid generator which generates an amount of heat acid 1 x 10⁻⁴ mol/L or less make it possible to realize preventing increase of ink viscosity and deterioration of nozzle ink repellency over times and exhibiting excellent ejecting stability. When an amount of generation of protonic acid is 5.0 x 10⁻⁵ mol/L or less, an increase of ink viscosity and deterioration of nozzle ink repellency over times can be prevented better.

A typical photo acid generator will be specifically described in details as below.

As such a photo acid generator, any compound used, for example, for chemical sensitization-type photoresists and photo-cationic polymerization is used (refer to pages 187 - 192 of "Imaging Yo Yuki Zairyo (Organic Materials Used for Imaging Applications)" edited by Yuki Electronics Zairyo Kenkyukai published by Bunshin Shuppan (1993). Examples of compounds suitable for the present invention will now be listed.

Initially, there can be listed B(C₆F₅)⁴⁻, PF₆⁻, AsF₆⁻, SbF₆⁻, and CF₃SO₃⁻ salts of aromatic onium compounds such as diazonium, ammonium, iodonium, sulfonium, and phosphonium.

Specific examples of such onium compounds usable for the present invention are listed below.

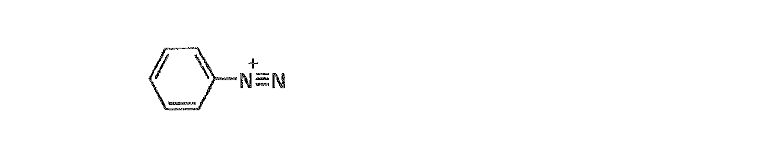

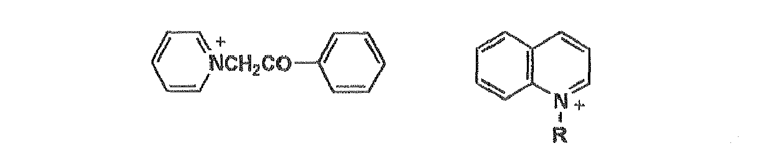

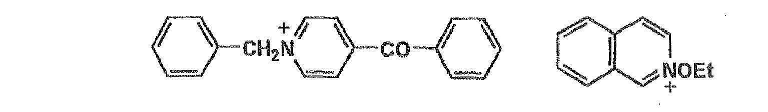

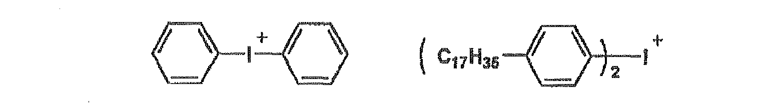

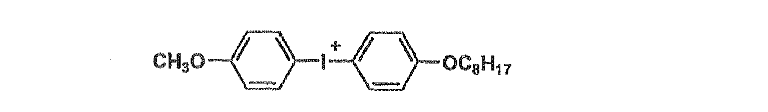

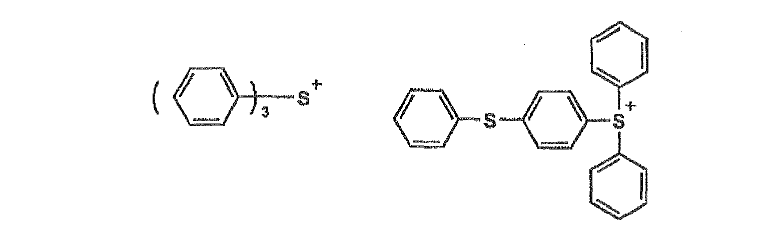

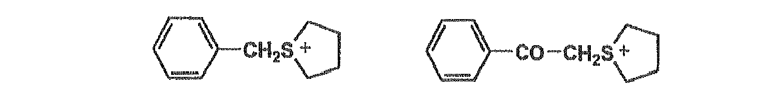

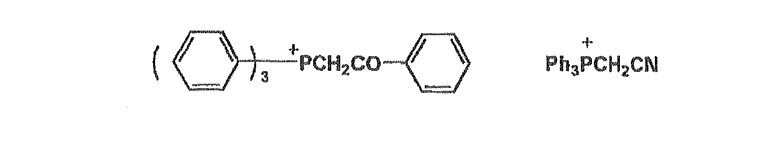

Secondly, sulfonated compounds generating sulfonic acid can be listed and specific compounds will now be exemplified.

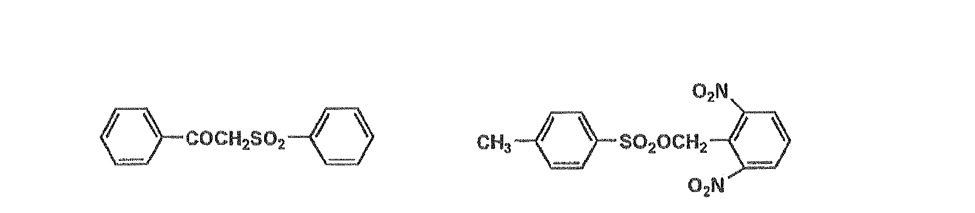

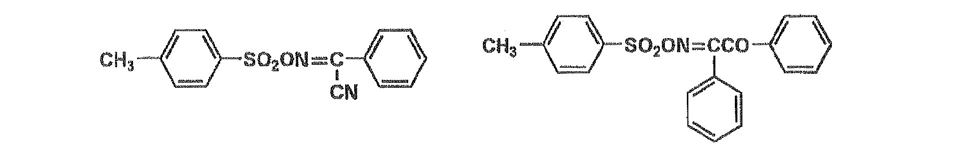

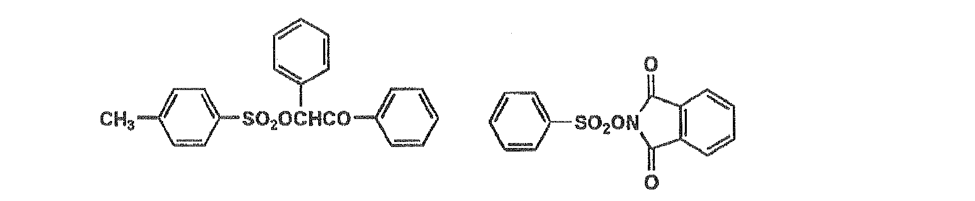

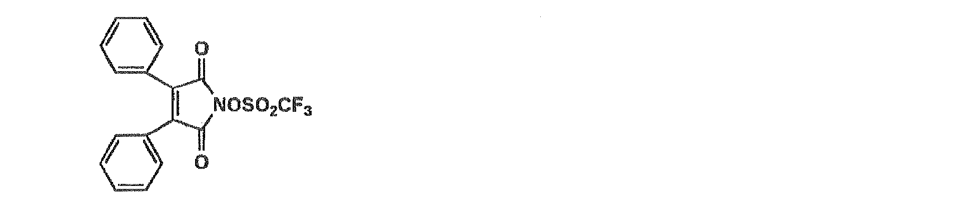

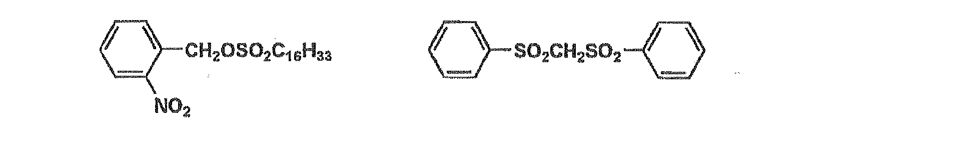

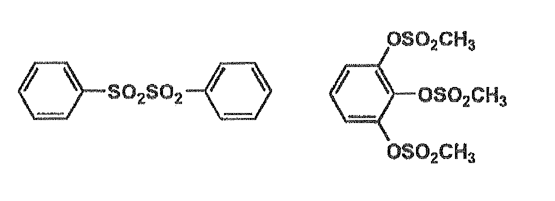

Thirdly, halides photolytically generating hydrogen halides are usable. Specific compounds will now be exemplified.

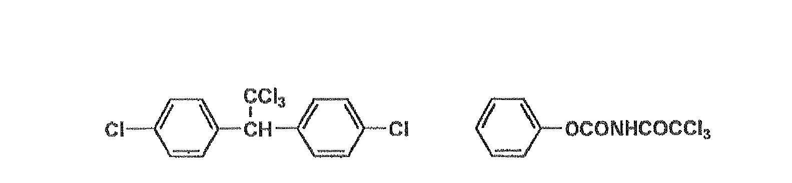

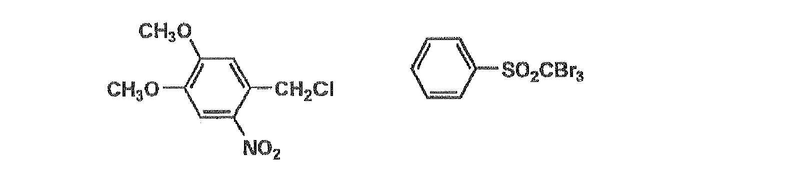

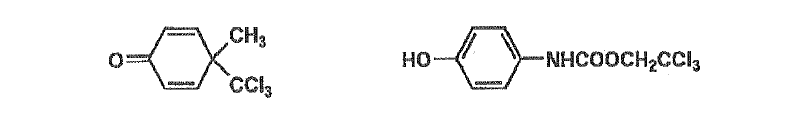

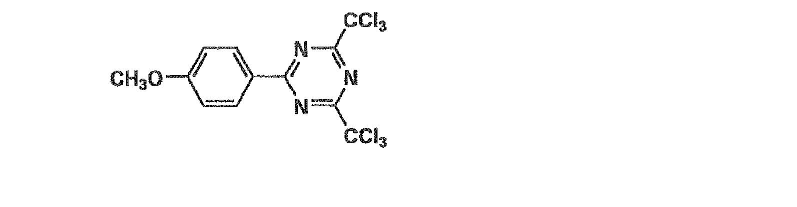

Fourthly, iron-arene complexes can be listed.

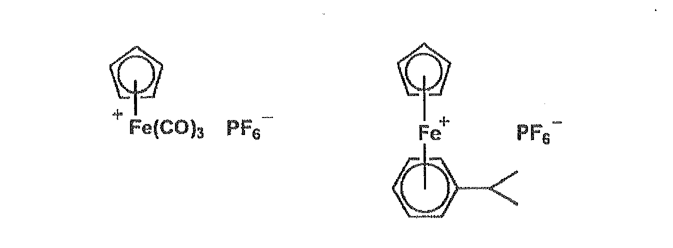

Further, in the ink of the present invention, preferable are sulfonium salt compounds represented by following Formulas [1] - [3] in view of having high heat stability and low amount of generation of protonic acid. Moreover and those having a substituent in a benzene ring joining an S⁺ which generate no benzene via decomposition by light irradiation is preferable in view of environmental load.

In above Formulas [1] - [3], R₁ - R₁₁ each represent a hydrogen atom, or a substituent, respectively.

Preferable substituents represented by R₁ - R₁₁ include an alkyl group such as a methyl group, an ethyl group, a propyl group, an isopropyl group, a butyl group, an isobutyl group, a t-butyl group, a pentyl group, or a hexyl group; an alkoxy group such as a methoxy group, an ethoxy group, a propoxy group, a butoxy group, a hexyloxy group, a decyloxy group, or a dodecyloxy group; a carbonyl group such as an acetoxy group, a propionyloxy group, a decylcarbonyloxy group, a dodecylcarbonyloxy group, a methoxycarbonyl group, an ethoxycarbonyl group, or a benzoyloxy group; a phenylthio group; a halogen atom such as a fluorine atom, a chlorine atom, a bromine atom, or an iodine atom; a cyano group; a nitro group; and a hydroxy group.

X represents a non-nucleophilic anion residue . Listed are, for example, a halogen atom such as F, Cl, Br, or I, B(C₆F₅)₄, R₁₈COO, R₁₉SO₃, SbF₆, AsF₆, PF₆, and BF₄. However, R₁₈ and R₁₉ each represent an alkyl group or a phenyl group which may be substituted with an alkyl group such as a methyl group, an ethyl group, a propyl group, or a butyl group, a halogen atom such as fluorine, chlorine, bromine, or iodine, a nitro group, a cyano group, or an alkoxy group such as a methoxy group or an ethoxy group. Of these, B(C₆F₅)₄ and PF₆ are preferable from the viewpoint of safety.

The above compounds can readily be synthesized by methods known in the art in the same manner as for photo acid generators described in Bulletin of The Chemical Society of Japan, Vol. 71, No. 11, 1998, and "Imaging Yo Yuki Zairyo (Organic Materials Used for Imaging Applications)" edited by Yuki Electronics Zairyo Kenkyukai published by Bunshin Shuppan (1993).

In addition, listed are the fluorinated alkyl fluorophosphoric acid onium salts described in WO 2005/116038, the dithienylbenzene sulfonium salts described in JP-A Nos. 2008-273878 and 2008-273879, and the bithiophene disulfonium salts described in JP-A No. 2008-239519.

Further, as a photo acid generators according to the present invention, the compound represented by foresaid Formula [4] and [5] is preferred in view of odorless properties during printing, odorless properties of printed matter in addition to high heat stability and low amount of generation of protonic acid.

In Formula [4], n represents 1 or 2; X represents S, O, CH₂, CO, single bond or N-R wherein R represents a hydrogen atom, an alkyl group or an aryl group; Y₁ and Y₂ each represent an hydrogen atom, a linear or a branched alkyl group having 1 to 6 carbon atoms, a cycloalkyl group, O-alkyl group, a hydroxyl group, a halogen atom, S-alkyl group or S-aryl group; Z⁻ represent MQₚ; M represent B, P, As or Sb; Q represent F, Cl, Br, I or perfluorophenyl; p represent an integer of 4 to 6; A represent Formula [4A].

In Formula [4A], m represent 1 or 2; R₁ to R₉ represent a single bond, a hydrogen atom, a halogen atom, a nitro group, a linear or a branched alkyl group having 1 to 6 carbon atoms, a linear or a branched alkoxy group having 1 to 6 carbon atoms, or a linear or a branched alkylthio group having 1 to 6 O-carbon atoms, provided that at least one of R₁ to R₅ is a hydrogen atom.

When m is 1, B represent O, S, SO, So₂, CH₂, single bond, NR (R represent a hydrogen atom or a linear or a branched alkyl group having 1 to 6 carbon atoms) or a linear or a branched alkylene group having 2 to 18 carbon atoms and has two hetero atoms selected from O, S and N-R at terminals. Above alkylene group is finally substituted by a linear or a branched hydroxyalkyl group having 1 to 6 carbon atoms, a linear or a branched mercaptoalkyl group having 1 to 6 carbon atoms, a hydroxyl group, amino group or aminoalkyl group, or an alicyclic group contaning two nitrogen atoms in a ring, wherein an alicyclic group is preferable finally substituted by OH, NH2, a linear or a branched aminoalkyl group having 1 to 6 carbon atoms.

When m is 2, B represent N, a linear or a branched alkyl group having number of 3 to 18 carbon atoms and has three hetero atoms selected from O, S and N-R. Foresaid alkyl group is finally substituted by a hydroxyl alkyl group having 1 to 6 carbon atoms, mercaptoalkyl group having 1 to 6 carbon atoms, hydroxyl group, amino group or aminoalkyl group, or alicyclic group having three N in a ring, wherein alicyclic group is finally selected from alicyclic groups substituted by OH, NH₂, linear or branched aminoalkyl group having 1 to 6 carbon atoms.

Phosphonium salt compound represented by Formula [4] include:
4,4'-bis-(thianthrenium-9-il)-diphenyl ether dihexafluorophosphate, 4,4'-bis-(2,6-dimethyl-thianthrenium-9-il)-diphenyl ether dihexafluorophosphate, 4,4'-bis-(thianthrenium-9-il)-diphenylsulfide dihexafluorophosphate, 1,2-bis-[4,-(thianthrenium-9-il)-phenoxy]-ethane dihexafluorophosphate, 1,4-bis-[4-(thianthrenium-9-il)-phenyl]-pyperadine dihexafluorophosphate, 1,2,3-tris-[4-(thianthrenium-9-il)-phenoxy]-propane trihexafluorophosphate, 4,4'-bis-(thianthrenium-9-il)-diphenyl dihexafluorophosphate and 4,4'-bis-(thianthrenium-10-il-9-on)-diphenyl ether dihexafluorophosphate.

In Formula [5], X represents S, O, CH₂, CO, single bond or N-R wherein R represents a hydrogen atom, an alkyl group or an aryl group; Y₁', Y₂' and Y₃' each represent an hydrogen atom, a linear or a branched alkyl group having 1 to 6 carbon atoms, a cycloalkyl group, O-alkyl group, a hydroxyl group, a halogen atom, S-alkyl group or S-aryl group or NR₁R₂, R₁, R₂ represents a hydrogen atom, a linear or a branched alkyl group, a cycloalkyl group or an aryl group; L⁻ represent MQₚ; M represent B, P, As or Sb; Q represent F, Cl, Br, I or perfluorophenyl; p represent an integer of 4 to 6.

D represent a linear or a branched alkyl group or a cycloalkyl group having 2 to 6 carbon atoms having 1 or 2 or more groups as a substituent selected from OH, OR, NH₂, NHR, NR₁R₂, SH and SR (R, R₁, R₂ represents a hydrogen atom, a linear or a branched alkyl group, a cycloalkyl group or an aryl group), a linear or a branched alkylthio group or a cycloalkylthio group having 2 to 6 carbon atoms having 1 or 2 or more groups as a substituent selected from SH, SR, OH, OR, NH₂, NHR and NR₁P₂ (R, R₁, R₂ represents a hydrogen atom, a linear or a branched alkyl group, a cycloalkyl group or an aryl group), or NR₃R₄ (R₃, R₄ represents a hydrogen atom, a linear or a branched alkyl group having 1 to 12 carbon atoms).

Sulfonium salt compound represented by Formula [5] include: 9-[4-(2-hydroxyetoxy)-phenyl]- thianthrenium hexafluorophospate and 9-[4-(2,3-di-hydroxy-propoxy)-phenyl]-thianthrenium hexafluorophospate.

Further, usable are compounds in which any of these photo-cationic polymerization initiators or a group or compound having the same function is introduced into a main chain or a side chain of a polymer. There can be used the compounds described, for example, in U.S. Patent No. 3,849,137, German Patent No. 3914407, and JP-A Nos. 63-26653, 55-164824, 62-69263, 63-146038, 63-163452, 62-153853, and 63-146029. Still further, usable are the photolytically acid generating compounds described in U.S. Patent No. 3,779,778 and EP No. 126,712.

On the other hand, the ink substantially does not contain bis(triaryl)sulfate represented by Formula [A] according to the preferred embodiment of the present invention.

Bis(triaryl)sulfonium salt represented by Formula [A] is not suitable to the ink-jet ink of the present invention because heat stability is low and an amount of generation of protonic acid is high. Therefore the ink of the present invention does not substantially contain compound represented by Formula [A]. Embodiment of "Substantially does not contain" in this case means that the compound represented by Formula [A] is not intentionally added in the ink. Therefore the case is excluded in which a very small quantity of the compound is mixed into the ink as an impurity other than intentionally. Therefore a quantity mixed as an impurity is 2 % by mass or less based on total of a photo acid generator. Specific example of such photo acid generator as bis(triaryl)sulfonium salt represented by Formula [A] is UVI-6992 (produced by Dow Chemical) and UVACURE-1591 (produced by Daicel).

Such a photo-cationic polymerization initiator is preferably contained at 0.2 - 10 parts by mass based on 100 parts by mass of a cationically polymerizable compound, more preferably 0.5 - 5 parts by mass. When the content of the photo polymerization initiator is less than 0.2 parts by mass, a cured material is difficult to obtain. Even when the content is more than 10 parts by mass, the initiator itself serves as a UV absorbent, resulting in a shielding effect in the ink, whereby no effect to further enhance curability is produced and also ink storage stability at low and high temperatures is degraded. These photo-cationic polymerization initiators can be used individually or in combinations of at least 2 types.

### «Method for purification of Photo acid generators»

With regard to a photolytically acid generation agent, components assumed to be its main component and impurities occasionally decompose very slightly during long-term ink storage. During this process, radicals and protic acids are generated and polymerizable compounds having a vinyl ether group in the ink are incorrectly polymerized in some cases, resulting in an increasing ink viscosity and a of nozzle ink repellency.

In order to obtain the predetermined amount of generation of protonic acid of the present invention, purity of a photo acid generator is preferred in high degree. Purity is preferably 80 % or more, more preferably 90 % or more.

As methods to reduce impurities, known are a method of adsorption to activated carbon or a basic adsorbent and a separation method such as column chromatography, crystallization, or recrystallization. Even in cases in which impurities are reduced via any of these processes, when thermal stability is inadequate, impurities having a structure similar to that of a photo acid generator and exhibiting low thermal stability are considered to remain. For example, the photo acid generator is a triaryl sulfonium salt derivative, it is possible that a diaryl sulfonium salt or a bis(triaryl sulfonium salt) is incorporated. The thermal stability of these derivatives is lower than that of a triaryl sulfonium salt as a main component. In such a case, the following purification process may be provided to eliminate such impurities.

### (Purification Process)

The purification process contains a step to heat a photolytically acid generation agent to generate protic acids via thermal decomposition of impurities and a step for proton elimination carried out after the heating step. In the case of an aryl sulfonium salt, preferable is a process containing a heating step for heating in the temperature range from 60 °C or more to lower than the decomposition temperature (°C) of the aryl sulfonium salt and a step for proton elimination carried out after the heating step, provided that when the heating temperature of the heating step is t (°C) and the heating duration is h (hr), the relationship of K - 59h ≥ 82 is satisfied.

Herein, K is a value obtained by integration from x = 0 to x = h via determination of a heating duration-heating temperature curve, provided that heating duration h is designated as the x axis and heating temperature t is designated as the y axis .

As specific methods of the heating treatment, listed are a method to heat a solvent dissolving an aryl sulfonium salt and a method to heat solid particles of an aryl sulfonium salt. Of these, the method to heat a solvent dissolving an aryl sulfonium salt is preferable.

As the solvent, protic or non-protic polar organic solvents are preferably used, depending on the structure of a triaryl sulfonium salt.

For example, listed are alcohols such as ethanol or propanol; ethers and acetals such as anisol, diethyl ether, dioxane, or tetrahydrofuran; ketones such as acetone, isophorone, or methyl ethyl ketone; esters such as ethyl acetate, ethyl lactate, or γ-butyrolactone; polyols and derivatives thereof such as propylene carbonate, ethylene glycol diacetate, or diethylene glycol diethyl ether; organic acids and anhydrides thereof such as acetic acid, propionic acid, or acetic anhydride; nitrogen-containing compounds such as 2-pyrrolidone, N-methylpyrrolidone, or N-methylformamide; and sulfur-containing compounds such as diphenyl sulfone, dimethyl sulfoxide, or sulfolane. Of these, dioxane or propylene carbonate is preferably used.

Heating temperature t (°C) of the heating step is the temperature of a solvent in the case of a method to heat a solvent dissolving an aryl sulfonium salt, or the ambience temperature in the case of a method to heat solid particles.

With the heating temperature of less than 60 °C, when an ink-jet ink is stored for a long-term period, ejection failure occurs.

When K - 59h is less than 82 in the relationship (K - 59h ≥ 82), ejection failure occurs after long-term storage.

In the heating treatment, heating temperature may be changed within the above range.

Heating temperature h is from 60 °C to less than the decomposition temperature of an aryl sulfonium salt but is preferably from 60 °C to (the decomposition temperature (°C) of the aryl sulfonium salt - 10 °C)) to treat the aryl sulfonium salt with no decomposition.

The proton elimination step is one to eliminate protons considered to generate by heating via any of the following treatments: alkali treatment of making contact with an alkaline agent, chromatographic separation via various chromatographs, and water treatment of making contact with water.

The alkali treatment is a treatment to allow an aryl sulfonium salt to be brought into contact with an alkaline agent. The alkali treatment is carried out via a method to make contact with the alkaline agent in a solvent dissolving the aryl sulfonium salt. As a solvent to dissolve the aryl sulfonium salt in the alkali treatment, a solvent used in the above heating treatment is employed. The alkaline agent includes carbonates of alkali metals and alkaline earth metals such as potassium carbonate or sodium carbonate. The method to make contact includes a method to stir a mixture of an aryl sulfonium salt solution and an alkaline agent. The alkali treatment temperature is preferably from 10 °C to (the decomposition temperature (°C) of an aryl sulfonium salt - 10 (°C)), but specifically preferably 10 °C to 40 °C since no heating and cooling apparatuses are required. After the alkali treatment step, a step to eliminate water via dehydration treatment using magnesium sulfate is preferably provided.

The chromatographic separation treatment includes, for example, a method in which the above alkaline agent solution is passed through a column filled with a cationic exchange resin and then the aryl sulfonium salt solution having been heat-treated is passed thereto.

The water treatment can be carried out by stirring a mixture of a solvent dissolving an aryl sulfonium salt and water.

Above purification process is preferable to improve storage stability of ink which is one of object and effect of the present invention such as suppressing viscosity increasing by polymerization of vinyl ether compound or deterioration of nozzle ink repellency.

### «Sensitizers»

In the ink of the present invention, a sensitizer can be used for a polymerization initiator (a photo acid generator). As the sensitizer, when a sulfonium salt is used as a photo-initiator, anthracene and anthracene derivatives (e.g., Adekaoptomer SP-100 produced by Asahi Denka Kogyo K.K., diethoxyanthracene, and dibutoxyanthracene) are listed. In the case of an iodonium salt photo-initiator, thioxanthones are usable. These sensitizers can be used individually or in combinations of at least 2 types. The added amount thereof is preferably 0.2 - 5 parts by mass based on 100 parts by mass of a cationically polymerizable compound, more preferably 0.5 - 4 parts by mass. In the case of less than 0.2 parts by mass, poor sensitizing effects are produced. In contrast, in the case of more than 5 parts by mass, the problems of coloration of a sensitizer itself and of coloration due to decomposition of the sensitizer.

As specific examples of polycyclic aromatic compounds, carbazole derivatives, and thioxanthone derivatives, which can also be used for a sensitizer, having at least one group from a hydroxyl group and a substitutable aralkyloxy group and alkoxy group as a substituent, the following compounds can be cited.

As the polycyclic aromatic compounds, naphthalene derivatives, anthracene derivatives, chrysene derivatives, and phenanthrene derivatives are preferable. The alkoxy group being a substituent preferably has 1 to 18 carbon atoms, specifically preferably 1 to 8. The aralkyloxy group preferably has 7 to 10 carbon atoms. Of these, a benzoyloxy group and a phenethyloxy group having 7 or 8 carbon atoms are specifically preferable.

These sensitizers include, for example, naphthalene derivatives including naphthol derivatives and condensates with formalin such as 1-naphthol, 2-naphthol, 1-methoxynaphthalene, 1-stearyloxynaphthalene, 2-methoxynaphthalene, 2-dodecyloxynaphthalene, 4-methoxy-1-naphthol, glycidyl-1-naphthyl ether, 2-(2-naphthoxy)ethyl vinyl ether, 1,4-dihydroxynaphthalene, 1,5-dihydroxynaphthalene, 1,6-dihydroxynaphthalene, 2,7-dihydroxynaphthalene, 2,7-dimethoxynaphthalene, 1,1'-thiobis(2-naphthol), 1,1'-bi-2-naphthol, 1,5-naphthyldiglycdyl ether, 2,7-di(2-vinyloxyethyl)naphthyl ether, 4-methoxy-l-naphthol, or ESN-175 (an epoxy resin produced by Nippon Steel Chemical Co., Ltd.) or its series; anthracene derivatives such as 9,10-dimethoxyanthracene, 2-ethyl-9,10-dimethoxyanthracene, 2-t-butyl-9,10-dimethoxyanthracene, 2,3-dimethyl-9,10-dimethoxyanthracene, 9-methoxy-10-methylanthracene, 9,10-diethoxyanthracene, 2-ethyl-9,10-diethoxyanthracene, 2-t-butyl-9,10-diethoxyanthracene, 2,3-dimethyl-9,10-diethoxyanthracene, 9-ethoxy-10-methylanthracene, 9,10-dipropoxyanthracene, 2-ethyl-9,10-dipropoxyanthracene, 2-t-butyl-9,10-dipropoxyanthracene, 2,3-dimethyl-9,10-dipropoxyanthracene, 9-isopropoxy-10-methylanthracene, 9,10-dibenzyloxyanthracene, 2-ethyl-9,10-dibenzyloxyanthracene, 2-t-butyl-9,10-dibenzyloxyanthracene, 2,3-dimethyl-9,10-dibenzyloxyanthracene, 9-benzyloxy-10-methylanthracene, 9,10-di-α-methylbenzyloxyanthracene, 2-ethyl-9,10-di-α-methylbenzyloxyanthracene, 2-t-butyl-9,10-di-α-methylbenzyloxyanthracene, 2,3-dimethyl-9,10-di-α-methylbenzyloxyanthracene, 9-(α-methylbenzyloxy)-10-methylanthracene, 9,10-di(2-hydroxyethoxy)anthracene, or 2-ethyl-9,10-di(2-carboxyethoxy)anthracene; chrysene derivatives such as 1,4-dimethoxychrysene, 1,4-diethoxychrysene, 1,4-dipropoxychrysene, 1,4-dibenzyloxychrysene, or 1,4-di-α-methylbenzyloxychrysene; and phenanthrene derivatives such as 9-hydroxyphenanthrene, 9,10-dimethoxyphenanthrene, or 9,10-diethoxyphenanthrene. Of these derivatives, 9,10-dialkoxyanthracene derivatives which may have an alkyl group of 1 to 4 carbon atoms are specifically preferable, and as the alkoxy group, a methoxy group and an ethoxy group are preferable.

As the carbazole derivatives, carbazole, N-ethylcarbazole, N-vinylcarbazole, and N-phenylcarbazole are listed.

Further, as the thioxanthone derivatives, for example, thioxanthone, 2,4-dimethylthioxanthone, 2,4-diethylthioxanthone, isopropylthioxanthone, and 2-chlorothioxanthone are listed.

### «Other Additives»

In the ink-jet ink of the present invention, for the intended purposes to improve ejection stability, packaging container suitability for a print heat and ink, storage stability, image stability, and other performance properties, there can appropriately be used, in addition to the above compounds, various well-known additives such as surfactants, lubricants, fillers, antifoamers, gelling agents, thickeners, specific resistance regulators, coated film forming agents, UV absorbents, anti-oxidants, anti-fading agents, antifungal agents, or anti-corrosion agents, if desired.

Further, a small amount of a solvent such as an ester-based solvent, an ether-based solvent, an ether ester-based solvent, a ketone-based solvent, an aromatic hydrocarbon solvent, or a nitrogen-containing organic solvent can also be added as appropriate.

Specific examples thereof include dimethyl sulfoxide, diethyl sulfoxide, methyl ethyl sulfoxide, diphenyl sulfoxide, tetraethylene sulfoxide, dimethyl sulfone, methyl ethyl sulfone, methyl isopropyl sulfone, methyl hydroxyethyl sulfone, sulfolane, N-methyl-2-pyrrolidone, 2-pyrrolidone, β-lactam, N,N-dimethylformamide, N,N-diethylformamide, N,N-dimethylacetamide, 1,3-dimethyl-2-imidazolidinone, 3-methyl-2-oxazolidinone, γ-butyrolactone, γ-valerolactone, isophorone, cyclohexane, propylene carbonate, anisol, methyl ethyl ketone, acetone, ethyl lactate, butyl lactate, dioxane, ethyl acetate, butyl acetate, diethylene glycol dimethyl ether, dibasic acid esters, and methoxybutyl acetate. Any of these is added in the ink at 1.5 - 30%, preferably at 1.5 - 15% to enhance adhesion properties to a resin recording medium such as polyvinyl chloride.

Other specific examples include alkylene glycol monoalkyl ethers such as diethylene glycol monoethyl ether, triethylene glycol monomethyl ether, dipropylene glycol monomethyl ether, or tripropylene glycol monomethyl ether; alkylene glycol dialkyl ethers such as ethylene glycol dibutyl ether or tetraethylene glycol dimethyl ether; and alkylene glycol monoalkyl ether acetates such as ethylene glycol monobutyl ether acetate, as well as diethylene glycol diethyl ether, dipropylene glycol dimethyl ether, dipropylene glycol diethyl ether, ethylene glycol diacetate, and propylene glycol diacetate.

### «Ink Physical Properties»

The ink of the present invention preferably has, as physical properties, physical properties values similar to those of a common curable ink-jet ink. Namely, the ink is preferably allowed to exhibit a viscosity of 2 - 50 mPa·s at 25 °C, shear rate dependency as little as possible, and a surface tension of 22 - 35 mN/m at 25 °C; to have, other than pigment particles, no gel substances having an average particle diameter of more than 1.0 µm; to exhibit a conductivity of at most 10 µS/cm; and to induce no electrical corrosion in the interior of the head. In a continuous type, conductivity needs to be adjusted using an electrolyte, and in this case, the conductivity needs to be adjusted at 0.5 mS/cm or more.

In addition, in physical properties of the ink of the present invention, a more preferable embodiment is that when DSC determination of the ink is carried out at a dropping rate of 5 °C/minute in the range of 25 °C - -25 °C, the calorific value per mass is not exhibited at 10 mJ/mg or more as the exothermic peak. Selection of materials based on the constitution of the present invention makes it possible to prevent heat generation of a given amount or more based on the DSC determination. With such a constitution, even when an ink is stored at low temperatures, generation of gel and deposits can be prevented.

### «Ink Preparation Method»

The ink-jet ink of the present invention can be produced by sufficiently dispersing a pigment together with a vinyl ether compound serving as an actinic energy radiation curable compound and a pigment dispersant using a common homogenizer such as a sand mill. It is preferable that a highly concentrated liquid of a pigment be previously prepared, followed by being diluted with an actinic energy radiation curable compound. Dispersion using such a common homogenizer enables to carry out adequate dispersion. Thereby, no excessive amount of dispersion energy is required and excessively long dispersion duration is unnecessary, whereby properties of an ink component tend not to be changed during dispersion and an ink exhibiting excellent stability can be prepared. The thus-prepared ink is preferably filtered with a filter of a pore diameter of at most 3 µm, more preferably at most 1 µm.

### «Recording Media»

As recording media used for the ink-jet recording method of the present invention, a wide variety of all the synthetic resins having been used for various end use applications are covered, including, for example, polyester, polyvinyl chloride, polyethylene, polyurethane, polypropylene, acrylic resins, polycarbonate, polystyrene, acrylonitrile-butadiene-styrene copolymers, polyethylene terephthalate, and polybutadiene terephtalate. The thicknesses and shapes of these synthetic resin substrates are not specifically limited. In addition, metals, glass, and printing paper are also usable.

Specific examples of polyvinyl chloride which is one of the recording media used for the ink-jet recording method of the present invention include SOL-371G, SOL-373G, and SOL-4701 (produced by VIGteQnos Co. Ltd.); glossy vinyl chloride (produced by System Graphi Co., Ltd.); KSM-VS, KSM-VST, and KSM-VT (produced by Kimoto Co., Ltd.); J-CAL-HGX, J-CAL-YHG, and J-CAL-WWWG (produced by Kyosyo Co., Ltd., Osaka); BUS MARK V400F vinyl and LITEcal V-600F vinyl (produced by Flexcon Co.); FR2 (produced by Hanwha Corp.); LLBAU13713 and LLSP20133 (produced by Sakurai Co., Ltd.); P-370B and P-400M (produced by Kanbo Pras Corp.); S02P, S12P, S13P, S14P, S22P, S24P, S34P, and S27P (produced by Grafityp Co.); P-223RW, P-224RW, P-249ZW, and P-284ZC (produced by Lintec Corp.); LKG-19, LPA-70, LPE-248, LPM-45, LTG-11, and LTG-21 (produced by Shinseisha Co., Ltd.); MPI3023 (produced by Toyo Corp.); Napoleon Gloss glossy vinyl chloride (produced by Niki Inc.); JV-610 and Y-114 (produced by IKC Co., Ltd.); NIJ-CAPVC and NIJ-SPVCGT (produced by Nitie Corp.); 3101/H12/P4, 3104/H12/P4, 3104/H12/P4S, 9800/H12/P4, 3100/H12/R2, 3101/H12/R2, 3104/H12/R2, 1445/H14/P3, and 1438/One Way Vision (produced by Intercoat Co.); JT5129PM, JT5728P, JT5822P, JT5829P, JT5829R, JT5829PM, JT5829RM, and JT5929PM (produced by Mactac AG); MPI1005, MPI1900, MPI2000, MPI2001, MPI2002, MP13000, MPI3021, MPI3500, and MPI3501 (produced by Avery Corp.); AM-101G and AM-501G (produced by Gin-Ichi Corp.); FR2 (produced by Hanwha Japan Co., Ltd.), AY-15P, AY-60P, AY-80P, DBSP137GGH, and DBSP137GGL (produced by Insight Co.); SJT-V200F and SJT-V400F-1 (produced by Hiraoka & Co., Ltd.); SPS-98, SPSM-98, SPSH-98, SVGL-137, SVGS-137, MD3-200, MD3-301M, MD5-100, MD5-101M, and MD5-105 (produced by Metamark UK Ltd.); 640M, 641G, 641M, 3105M, 3105SG, 3162G, 3164G, 3164M, 3164XG, 3164XM, 3165G, 3165SG, 3165M, 3169M, 3451SG, 3551G, 3551M, 3631, 3641M, 3651G, 3651M, 3651SG, 3951G, and 3641M (produced by Orafol Europe GmbH); SVTL-HQ130 (Lami Corporation Inc.); SP300 GWF and SPCLEARAD vinyl (produced by Catalina Co.); RM-SJR (produced by Ryoyoshoji Co., Ltd.), Hi Lucky and New Lucky PVC (produced by LG Corp.); SIY-110, SIY-310, and SIY-320 (produced by Sekisui Chemical Co., Ltd.); PRINT MI Frontlit and PRINT XL Light weight banner (produced by Endutex S.A.); RIJET 100, RIJET 145, and RIJET 165 (produced by Ritrama S.p.A.); NM-SG and NM-SM (produced by Nichiei Kakoh Co., Ltd.); LTO3GS (Rukio Co., Ltd.); Easy Print 80 and Performance Print 80 (produced by JetGraph Co., Ltd.); DSE 550, DSB 550, DSE 800G, DSE 802/137, V250WG, V300WG, and V350WG (produced by Hexis AG); and Digital White 6005PE and 6010PE (produced Multi-fix N.V.).

Further, for recording media formed of a resin substrate containing no plasticizer or a nonabsorbable inorganic substrate as a component, one type of substrate can be used alone or plural types of substrates can be used in combination using any of the following substrates as a component. The resin substrate containing no plasticizer used in the present invention includes, for example, ABS resins, polycarbonate (PC) resins, polyacetal (POM) resins, polyamide (PA) resins, polyethylene terephthalate (PET) resins, polyimide (PI) resins, acrylic resins, polyethylene (PE) resins, polypropylene (PP) resins, hard polyvinyl chloride (PVC) resins containing no plasticizer.

These resins are characterized by containing no plasticizer. Other characteristics such as thickness, shape, color, softening point, or hardness are not specifically limited.

As recording media used in the present invention, preferable are ABS resins, PET resins, PC resins, POM resins, PA resins, PI resins, PVC resins containing no plasticizer, acrylic resins, PE resins, and PP resins. But of these, ABS resins, PET resins, PC resins, PA resins, PVC resins containing no plasticizer, and acrylic resins are more preferable.

Further, the nonabsorbable inorganic substrate used in the present invention includes, for example, glass plates, metal plates such as iron or aluminum, and ceramic plates. These inorganic substrates are characterized by having no ink-absorbable layer on the surface. With regard to these nonabsorbable inorganic substrates, other characteristics such as thickness, shape, color, softening point, or hardness are not specifically limited.

### «Ink-jet Recording Method»

An ink-jet head used for image formation by ejecting the ink-jet ink of the present invention may be either an on-demand system or a continuous system. Further, as an ejection system, there may be used any of the ejection methods including an electrical-mechanical conversion system (e.g., a single cavity type, a double cavity type, a vendor type, a piston type, a share mode type, and a shared-wall type) and an electrical-thermal conversion system (e.g., a thermal ink-jet type and a BUBBLE JET (a registered trademark) type).

The ink-jet recording method of the present invention is a recording method in which the actinic energy radiation curable ink-jet ink of the present invention is ejected onto a recording medium and then the ink is cured via irradiation of actinic energy radiation such as UV radiation.

### (Actinic Energy Radiation Irradiation Conditions after Ink Deposition)

In the ink-jet recording method of the present invention, as an irradiation condition of actinic energy radiation, actinic energy radiation is preferably irradiated 0.001 second - 1.0 second after ink deposition, more preferably 0.001 second - 0.5 second.

To form highly detailed images, it is specifically preferable that the irradiation timing be as early as possible.

The irradiation method of actinic energy radiation is not specifically limited and can be performed, for example, by any of the following methods.

The methods include a method as described in JP-A No. 60-132767 in which radiation sources are arranged on both sides of the head unit, and the head and the radiation sources are scanned via a shuttle system; then irradiation is carried out within a specified period of time after ink deposition; and further, curing is completed with another radiation source being stationary; a method employing optical fibers as described in U.S. Patent No. 6,145,979; and a method in which UV radiation is irradiated to a recording portion by hitting collimated radiation onto a mirror surface provided on the side of the head unit.

In the ink-jet recording method of the present invention, any of these irradiation methods can be used.

Further, the following method is also one of the preferred embodiments: namely, actinic energy radiation irradiation is divided into two stages; initially, actinic energy radiation is irradiated 0.001 - 2.0 seconds after ink deposition via the above method; and after completion of entire printing, actinic energy radiation is further irradiated.

Dividing actinic energy radiation irradiation into two stages makes it possible to inhibit contraction of a recording medium which tends to occur during ink curing.

### (Total Ink Film Thickness after Ink Deposition)

In the ink-jet recording method of the present invention, after deposition of an ink onto a recording medium and then curing via irradiation of actinic energy radiation, the total ink film thickness is preferably 2 - 20 µm from the viewpoint of curling and wrinkling of a recording medium and texture change of the recording medium.

Herein, the term "total ink film thickness" refers to the maximum value of ink film thickness of an image recorded on a recording medium. The meaning of the above total ink film thickness is the same as in cases in which recording is conducted via a single color ink-jet recording method, as well as a 2-color superimposing (secondary color), 3-color superimposing, or 4-color superimposing (white ink base) inkjet recording method.

### (Ink Heating and Ejection Conditions)

In the ink-jet recording method of the present invention, actinic energy radiation is preferably irradiated while an actinic energy radiation curable ink-jet ink is heated, from the viewpoint of ejection stability.

Heating temperature is preferably 35 - 100 °C. While the temperature is kept at 35 - 80 °C, actinic energy radiation is more preferably irradiated from the viewpoint of ejection stability.

The method to heat an ink-jet ink at a predetermined temperature and to maintain the temperature is not specifically limited, including, for example, a method in which an ink feeding system such as an ink tank constituting the head carriage, a feeding pipe, and a pre-chamber ink tank just prior to the head, piping with filters, and a piezo head are thermally insulated and heated to the predetermined temperature using a panel heater, a ribbon heater, or temperature regulated water.

The controlled width of ink temperature is preferably in the range of a set temperature of + 5 °C, more preferably a set temperature of + 2 °C, specifically preferably a set temperature of ± 1 °C in view of ejection stability.

The droplet amount ejected from each nozzle is preferably 2 - 20 pl in view of recording speed and image quality.

Next, an ink-jet recording apparatus (hereinafter referred to simply as a recording apparatus) which can be used for the ink-jet recording method of the present invention will now be described.

The recording apparatus is described with appropriate reference to Drawings.

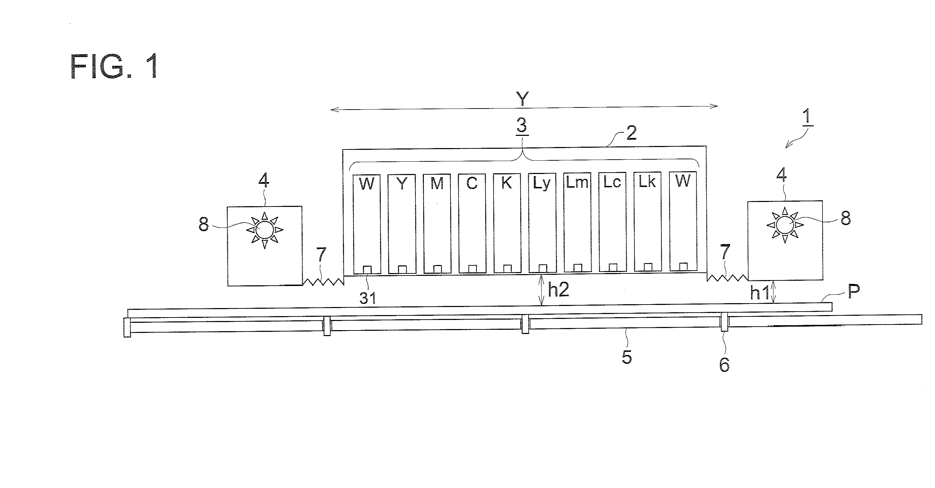

FIG. 1 is a front elevation view showing the constitution of a main section of a recording apparatus.

Recording apparatus 1 is constituted by having head carriage 2, recording head 3, irradiation member 4, and platen section 5.

In recording apparatus 1, platen section 5 is arranged under recording medium P.

Platen section 5 functions to absorb UV radiation and absorbs any extra UV radiation which has passed through recording medium P.

Thereby, highly detailed images can be reproduced very stably.

Recording medium P is guided by guide member 6 and is conveyed from the front to the rear in FIG. 1 via the action of a conveying member (not shown). A head scanning member (not shown) allows head carriage 2 to reciprocate in direction Y in FIG. 1, whereby recording head 3 held by head carriage 2 is scanned.

Head carriage 2 is arranged on the upper side of recording medium P, and a plurality of recording heads 3, described later, corresponding to the number of colors used for image printing on recording medium P, are housed in such a manner that the ejection orifices are arranged on the lower side.

Head carriage 2 is arranged for recording apparatus 1 main body to enable reciprocation in direction Y in FIG. 1. Via driving of the head scanning member, reciprocation is conducted in direction Y in FIG. 1.

Herein, FIG. 1 is drawn so that head carriage 2 houses recording heads 3 for white (W), yellow (Y), magenta (M), cyan (C), black (K), light yellow (Ly), light magenta (Lm), light cyan (Lc), light black (Lk), and white (W). In practice, the number of colors of recording heads 3 housed in head carriage 2 is appropriately determined.

Recording head 3 ejects an actinic energy radiation curable ink-jet ink (for example, a UV curable ink) fed by an ink feeding member (not shown) onto recording medium P from the ejection orifice via the action of a plurality of ejection members (not shown) provided within the interior.

Recording head 3 moves from one end of recording medium P to the other end thereof in direction Y in FIG. 1 via driving of the head scanning member. Then, during this scanning, the UV ink is ejected onto a specified area (being a depositable area) of recording medium P in the form of ink droplets and then the ink droplets are deposited onto the depositable area.

The above scanning is carried out at a specified number of times to eject the actinic energy radiation curable inkjet ink onto one depositable area. Thereafter, recording medium P is appropriately moved from the front to the rear in FIG. 1 via the conveying member. While scanning using the scanning member is carried out again, the UV ink is ejected onto a next depositable area adjacent to the above depositable area in the rearward direction in FIG. 1.

The above operation is repeated, and the actinic energy radiation curable ink-jet ink is ejected from recording head 3 under synchronization with the head scanning member and the conveying member to form an image containing an aggregate of the actinic energy radiation curable ink-jet ink droplets on recording medium P.

Irradiation member 4 is constituted by having a UV lamp which emits UV radiation having a specific wavelength range at stable exposure energy and a filter which transmits UV radiation of a specific wavelength.

Herein, applicable UV lamps include mercury lamps, metal halide lamps, excimer lasers, UV lasers, cold-cathode tubes, hot-cathode tubes, blacklights, and LEDs (light emitting diodes). Of these, preferable are band-shaped metal halide lamps, cold-cathode tubes, hot-cathode tubes, mercury lamps, and blacklights.

Preferable are low-pressure mercury lamps, hot-cathode tubes, cold-cathode tubes, and sterilization lamps especially emitting UV radiation of a wavelength of 254 nm, from the viewpoint of efficient bleeding prevention and dot diameter control.

Use of a black light as a radiation source for irradiation member 4 makes it possible to inexpensively produce irradiation member 4 to cure a UV ink.

Irradiation member 4 is nearly similar in shape to the maximum capable of being set for recording apparatus (a UV ink-jet printer) 1 or is larger in shape than the depositable area among the depositable areas on which the UV ink is ejected via one scanning of recording head 3 driven by the head scanning member.

Irradiation member 4 is arranged via fixation on both sides of head carriage 2 to be nearly parallel to recording medium P.

As described above, illuminance in the ink ejection section is regulated, of course, by shielding entire recording head 3 from light. Further, it is effective that distance h1 between irradiation member 4 and recording medium P is set to be smaller than distance h2 between ink ejection section 31 of recording head 3 and recording medium P (namely, h1 < h2); and also distance d between recording head 3 and irradiation member 4 is set to be far (namely, d is set to be large).

Still further, it is more preferable that bellows structure 7 be arranged between recording head 3 and irradiation member 4.

Herein, it is possible to appropriately change the wavelength of UV radiation irradiated by irradiation member 4 by replacing a UV lamp or a filter provided for irradiation member 4.

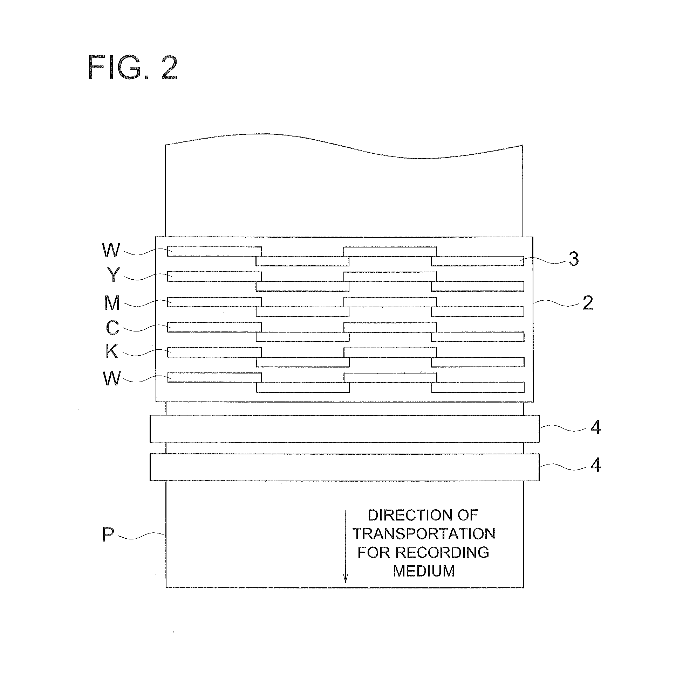

FIG. 2 is a top view showing another example of the constitution of a main section of an ink-jet recording apparatus.

The ink-jet recording apparatus shown in FIG. 2 is referred to as a line head system, and a plurality of ink-jet recording heads 3 of individual colors are fixed and arranged on head carriage 2 to cover the entire width of recording medium P.

On the other hand, on the downstream side of head carriage 2, namely in the rear of head carriage 2 in the direction of conveying recording medium P, irradiation member 4 is provided via arrangement to cover the entire ink printing area, similarly to cover the entire width of recording medium P.

As a UV lamp used for irradiation member 4, one similar to the one shown in FIG. 1 can be used.

In this line head system, head carriage 2 and irradiation member 4 are fixed and only recording medium P is conveyed to carry out image formation via ink ejection and curing.

### EXAMPLES

The present invention will now specifically be described with reference to Examples that by no means limit the scope of the present invention. Incidentally, the expression of "part" or "%" referred to in Examples represents "part by mass" or "% by mass" unless otherwise specified.

### Example 1

### «Ink Preparation»

### [Preparation of Pigment Dispersions]

Pigment dispersions 1 - 5 each were obtained by dispersing, at the same time, the pigment described in Table 1 and 2, pigment dispersant A (AJISPER PB824, produced by Ajinomoto Fine-Techno Co., Inc.), and triethyleneglycol divinyl ether (VE-1) in a sand mill for 4 hours.

Pigment dispersion 6 was obtained by dispersing, at the same time, the pigment described in Table 2, pigment dispersant A (AJISPER PB824, produced by Ajinomoto Fine-Techno Co., Inc.), and OXT221 (oxetane compound, produced by Toa Gosei Co. Ltd.) in a sand mill for 4 hours.

### [Preparation of Inks 1 - 36]

Subsequently, as described in Table 1 and 2, cationically polymerizable compounds, radical polymerization inhibitor (RS-1 - RS-8), a photo-cationic polymerization initiator (PI-1 - PI-4), and a sensitizer (DEA) were added to each of the thus-prepared pigment dispersion at a predetermined amount of each and the resulting mixture was dissolved, followed by filtration using a membrane filter of 0.85 µm to prepare inks 1 - 36.

Herein, the pigments and the dispersant used to prepare above inks 1 - 36 were used after having been washed with ion-exchange water and dehydrated to dryness. Further, each cationically polymerizable compound was previously purified via distillation. Still further, the photo-cationic polymerization initiator was used after having been washed a plurality time with methanol and ion-exchange water, dehydrated to dryness, and then measured amount of generation of protonic acid (calculated by the following step: a dioxane solution of 0.02 mol/L of a photo acid generator is refluxed for 20 hours under atmosphere pressure, 1g of each dioxane solution of both just after preparation and after refluxing treatment and 4g of pure water are mixed, plugged tightly, still stood 30 minutes, and then the pH of the water layer being a supernatant solution is determined at 25 °C, the difference in hydrogen ion [H⁺] concentration (mol/L) in solutions before and after refluxing treatment). When the halogen ion content (total of chlorine ion, bromine ion, iodine ion and fluorine ion) of each of the prepared inks was 20 µg/g or less.

### [Preparation of Ink 28]

Ink 28 was prepared based on the method, described below, in the same manner as the method described in Examples of JP-A No. 2008-28046 (Patent Document 7). Ink 8 has the same composition as that in Example 1 described in JP-A No. 2008-28046.

### (Preparation of Pigment Dispersion 6)

| | |
|---|---|
| Pigment: phthalocyanine-based pigment, 5412SD, produced by | |
| DIC Corp. | 22.0% |
| Pigment dispersant: AJISPER PB821, produced by Ajinomoto | |
| Fine-Techno Co., Inc., unwashed | 8.8% |

Vinyl ether compound: DVE-3, produced by ISP Japan Ltd., triethylene glycol vinyl ether, unpurified 69.2%

Each of the additives was mixed at the above ratio, followed by dispersion using an eiger mill (zirconia beads of a diameter of 0.5 mm was used as media) to obtain pigment dispersion 6.

The compositions of Inks 1 to 36 above are shown in Tables 1 and 2.

**Table 1**

| No. of Ink | Pigment Dispersion | | | | | | Cationically polymerizable compound | | | | | Radical polymerization inhibitor | | Photo-cationic polymerization initiator | | Sensitizer DEA | Remarks |
|---|---|---|---|---|---|---|---|---|---|---|---|---|---|---|---|---|---|
| | No. | Pigment | | Dispersant A | VE-1 | OXT 221 | Vinyl ether compound | | | Others | | | | | | | |
| | | *1 | *2 | | | | VE-1 | VE-2 | VE-3 | OXT | EP | *1 | *2 | *1 | *2 | | |
| 1 | 1 | PB | 2.5 | 1.0 | 12 | - | 54.48 | 10 | 15 | - | - | RS-1 | 0.02 | PI-1 | 4.0 | 1.0 | Inv. |
| 2 | 1 | PB | 2.5 | 1.0 | 12 | - | 54.48 | 10 | 15 | - | - | RS-1 | 0.02 | PI-2 | 4.0 | 1.0 | Inv. |
| 3 | 1 | PB | 2.5 | 1.0 | 12 | - | 54.48 | 10 | 15 | - | - | RS-2 | 0.02 | PI-2 | 4.0 | 1.0 | Inv. |
| 4 | 1 | PB | 2.5 | 1.0 | 12 | - | 54.48 | 10 | 15 | - | - | RS-3 | 0.02 | PI-2 | 4.0 | 1.0 | Inv. |
| 5 | 1 | PB | 2.5 | 1.0 | 12 | - | 54.48 | 10 | 15 | - | - | RS-4 | 0.02 | PI-2 | 4.0 | 1.0 | Inv. |
| 6 | 1 | PB | 2.5 | 1.0 | 12 | - | 54.48 | 10 | 15 | - | - | RS-5 | 0.02 | PI-2 | 4.0 | 1.0 | Inv. |
| 7 | 1 | PB | 2.5 | 1.0 | 12 | - | 54.48 | 10 | 15 | - | - | RS-6 | 0.02 | PI-2 | 4.0 | 1.0 | Inv. |
| 8 | 1 | PB | 2.5 | 1.0 | 12 | - | 54.48 | 10 | 15 | - | - | RS-7 | 0.02 | PI-2 | 4.0 | 1.0 | Inv. |
| 9 | 1 | PB | 2.5 | 1.0 | 12 | - | 54.48 | 10 | 15 | - | - | RS-8 | 0.02 | PI-2 | 4.0 | 1.0 | Inv. |
| 10 | 1 | PB | 2.5 | 1.0 | 12 | - | 54.48 | 10 | 5 | 8 | 2 | RS-1 | 0.02 | PI-1 | 4.0 | 1.0 | Inv. |
| 11 | 1 | PB | 2.5 | 1.0 | 12 | - | 54.48 | 10 | 5 | 8 | 2 | RS-1 | 0.02 | PI-2 | 4.0 | 1.0 | Inv. |
| 12 | 2 | PY | 3.0 | 1.0 | 12 | - | 53.98 | 10 | 5 | 8 | 2 | RS-1 | 0.02 | PI-1 | 4.0 | 1.0 | Inv. |
| 13 | 2 | PY | 3.0 | 1.0 | 12 | - | 53.98 | 10 | 5 | 8 | 2 | RS-1 | 0.02 | PI-2 | 4.0 | 1.0 | Inv. |
| 14 | 3 | PR | 4.0 | 1.0 | 12 | - | 52.98 | 10 | 5 | 8 | 2 | RS-1 | 0.02 | PI-1 | 4.0 | 1.0 | Inv. |
| 15 | 3 | PR | 4.0 | 1.0 | 12 | - | 52.98 | 10 | 5 | 8 | 2 | RS-1 | 0.02 | PT-2 | 4.0 | 1.0 | Inv. |
| 16 | 4 | CB1 | 2.0 | 1.0 | 12 | - | 54.98 | 10 | 5 | 8 | 2 | RS-1 | 0.02 | PI-1 | 4.0 | 1.0 | Inv. |
| 17 | 4 | CB1 | 2.0 | 1.0 | 12 | - | 54.98 | 10 | 5 | 8 | 2 | RS-1 | 0.02 | PI-2 | 4.0 | 1.0 | Inv. |
| 18 | 5 | Ti | 8.0 | 1.0 | 12 | - | 48.98 | 10 | 5 | 8 | 2 | RS-1 | 0.02 | PI-1 | 4.0 | 1.0 | Inv. |
| 19 | 5 | Ti | 8.0 | 1.0 | 12 | - | 48.98 | 10 | 5 | 8 | 2 | RS-1 | 0.02 | PI-2 | 4.0 | 1.0 | Inv. |

| | | | | | | | | | | | | | | | | | |
|---|---|---|---|---|---|---|---|---|---|---|---|---|---|---|---|---|---|
| *1: Species, *2: Content, Inv.: Present Invention | | | | | | | | | | | | | | | | | |

**Table 2**

| No. of Ink | Pigment Dispersion | | | | | | Cationically polymerizable compound | | | | | Radical polymerization inhibitor | | Photo-cationic polymerization initiator | | Sensitizer DEA | Remarks |
|---|---|---|---|---|---|---|---|---|---|---|---|---|---|---|---|---|---|
| | No. | Pigment | | Dispersant A | VE-1 | OXT 221 | Vinyl ether compound | | | Others | | | | | | | |
| | | *1 | *2 | | | | VE-1 | VE-2 | VE-3 | OXT | EP | *1 | *2 | *1 | *2 | | |
| 20 | 1 | PB | 2.5 | 1.0 | 12 | - | 39.50 | - | - | 30 | 10 | RS-1 | 0.001 | PI-2 | 4.0 | 1.0 | Inv. |
| 21 | 1 | PB | 2.5 | 1.0 | 12 | - | 39.48 | - | - | 30 | 10 | RS-1 | 0.02 | PI-2 | 4.0 | 1.0 | Inv. |
| 22 | 1 | PB | 2.5 | 1.0 | 12 | - | 39.30 | - | - | 30 | 10 | RS-1 | 0.20 | PI-2 | 4.0 | 1.0 | Inv. |
| 23 | 1 | PB | 2.5 | 1.0 | 12 | - | 39.00 | - | - | 30 | 10 | RS-1 | 0.50 | PI-2 | 4.0 | 1.0 | Inv. |
| 24 | 1 | PB | 2.5 | 1.0 | 12 | - | 24.48 | - | - | 40 | 10 | RS-1 | 0.02 | PI-1 | 4.0 | 1.0 | Inv. |
| 25 | 1 | PB | 2.5 | 1.0 | 12 | - | 24.48 | - | - | 40 | 15 | RS-1 | 0.02 | PI-2 | 4.0 | 1.0 | Inv. |
| 26 | 1 | PB | 2.5 | 1.0 | 12 | - | 24.48 | - | - | 40 | 15 | RS-1 | 0.02 | PI-3 | 4.0 | 1.0 | Inv. |
| 27 | 1 | PB | 2.5 | 1.0 | 12 | - | 24.48 | - | - | 40 | 15 | RS-2 | 0.02 | PI-2 | 4.0 | 1.0 | Inv. |
| 28 | 1 | PB | 2.5 | 1.0 | 12 | - | 24.48 | - | - | 40 | 15 | RS-3 | 0.02 | PI-2 | 4.0 | 1.0 | Inv. |
| 29 | 1 | PB | 2.5 | 1.0 | 12 | - | 24.48 | - | - | 40 | 15 | RS-4 | 0.02 | PI-2 | 4.0 | 1.0 | Inv. |
| 30 | 1 | PB | 2.5 | 1.0 | 12 | - | 24.48 | - | - | 40 | 15 | PS-5 | 0.02 | PI-2 | 4.0 | 1.0 | Inv. |
| 31 | 1 | PB | 2.5 | 1. 0 | 12 | - | 24 . 48 | - | - | 40 | 15 | RS-6 | 0.02 | PI-2 | 4.0 | 1.0 | Inv. |
| 32 | 1 | PB | 2.5 | 1.0 | 12 | - | 24 .48 | - | - | 40 | 15 | RS-7 | 0.02 | PI-2 | 4.0 | 1.0 | Inv. |
| 33 | 1 | PB | 2.5 | 1.0 | 12 | - | 24.48 | - | - | 40 | 15 | RS-8 | 0.02 | PI-2 | 4.0 | 1.0 | Inv. |
| 34 | 1 | PB | 2.5 | 1.0 | 12 | - | 24.48 | - | - | 40 | 15 | - | - | PI-2 | 4.0 | 1.0 | Comp. |
| 35 | 1 | PB | 2.5 | 1.0 | 12 | - | 24.48 | - | - | 40 | 15 | RS-1 | 0.02 | PI-4 | 4.0 | 1.0 | Comp. |
| 36 | 6 | PB | 2.5 | 1.0 | - | 12 | - | - | - | 60 | 19.48 | RS-1 | 0.02 | PI-2 | 4.0 | 1.0 | Comp. |

| | | | | | | | | | | | | | | | | | |
|---|---|---|---|---|---|---|---|---|---|---|---|---|---|---|---|---|---|
| *1: Species, *2: Content, Inv.: Present Invention, Comp.: Comparatives Example | | | | | | | | | | | | | | | | | |

Herein, the detail of each additive used to prepare each ink abbreviated in Table 1 and Table 2 is described below. Further, the added amount of each additive quantified in Table 1 and Table 2 is expressed by parts by mass.

### (Pigments)

PY: C.I. Pigment Yellow 150 (surface-treated, purified)
PR: C.I. Pigment Red 122 (surface-treated, purified)
PB: C.I. Pigment Blue 15:4 (surface-treated, purified)
CB1: carbon black (surface-treated, purified)
Ti: titanium oxide (surface-treated, purified)

### (Pigment Dispersant)

Dispersant A: polymer dispersant PB824 (produced by Ajinomoto Fine-Techno Co., Inc.)

### (Cationically Polymerizable Compounds)

### <Vinyl Ether Compounds>

VE-1: triethylene glycol divinyl ether (purified, viscosity at 25 °C: 3.4 mPa·s)
VE-2: diethylene glycol divinyl ether (purified, viscosity at 25 °C 2.2 mPa·s)
VE-3: ethylene oxide modified trimethylolpropane triacrylate trivinyl ether (purified, viscosity at 25 °C: 39.8 mPa·s)

### <Other Cationically Polymerizable Compounds>

OXT: OXT221, oxetane compound (viscosity at 25 °C: 13 mPa·s, produced by Toagosei Co., Ltd.)
EP: CEL2021P, alicyclic epoxy compound (viscosity at 25 °C: 250 mPa·s, produced by Daicel Chemical Industries, Ltd.)

### (Radical Polymerization Inhibitors)

RS1: 4-hydroxy-2,2,6,6-tetramethylpiperidineoxyl free radical
RS2: 1,1-diphenyl-2-picrylhydrazyl
RS3: 2,6-di-t-butyl-4-methylphenol
RS4: IRGANOX1076 (hindered phenol-based compound, produced by Ciba Japan K.K.)
RS5: hydroquinone
RS6: phenothiazine
RS7: p-methoxyphenol
RS8: TINUVIN123 (hindered amine-based compound, produced by Ciba Japan K.K.)

### (Photo-cationic Polymerization Initiator)

PI-1: (4-phenylthiophenyl)diphenylsulfonium hexafluorophosphate was prepared in accordance with Preparation Example 1 (3) disclosed in W02004/113396. After washing a plurality time with methanol and ion-exchange water, dehydrated to dryness, 50% by mass solution was prepared by dissolving in propylene carbonate . The amount of generation of protonic acid was measured by the method described above and amount of generation of protonic acid from PI-1 was 5.0 x 10⁻⁵ mol/L.

PI-2: (di(4-methoxyphenyl(4-methylphenyl)sulfonium hexafluorophosphate) was prepared in accordance with Example disclosed in JP-A No. 2005-146001 paragraph 0041. After washing a plurality time with methanol and ion-exchange water, dehydrated to dryness, 50% by mass solution was prepared by dissolving in propylene carbonate. The amount of generation of protonic acid was measured by the method described above and amount of generation of protonic acid from PI-2 was 1 x 10⁻⁴ mol/L.

PI-3: 9-(4-hydroxyethoxyphenyl)tiantolenium hexafluorophosphate was prepared in accordance with Example disclosed in Japanese Translation of PCT International Application Publication No. 2005-501040 paragraph 0052. After washing a plurality time with methanol and ion-exchange water, dehydrated to dryness, 50% by mass solution was prepared by dissolving in propylene carbonate. The amount of generation of protonic acid was measured by the method described above and amount of generation of protonic acid from PI-3 was 8.0 x 10⁻⁵ mol/L.

PI-4: 50% by mass solution of PI-4 was prepared by dissolving UVI-6992 (mixture of bis-[4-(diphenylsulfonio)phenyl]sulfidebishexafluorophosphate and (4-phenyltiophenyl)diphenylsulfonium hexafluorophosphate: produced by Dow Chemical) in propylene carbonate. The amount of generation of protonic acid was measured by the method described above and amount of generation of protonic acid from PI-4 was 7.0 x 10⁻³ mol/L.

### (Sensitizer)

### DEA: diethoxyanthracene

### «Evaluation of the Inks»

Each of the prepared inks was evaluated based on the following methods.

### (Evaluation of Nozzle Ink Repellency)

The nozzle plate member (exhibiting ink repellency) used for above piezo head 512SH (produced by Konica Minolta IJ Technologies, Inc.) was immersed in each ink at 70 °C for 10 days, and thereafter, whether or not the ink repellency was maintained was confirmed by visual inspection. Nozzle ink repellency was evaluated based on the following criteria. The term "Ink repellency" refers to the time confirmed by visual inspection that the ink flows down to eliminate from the surface of the nozzle plate when nozzle plate is immersed in ink at 70 °C for 10 days, followed by cooling to room temperature 25 °C in immersed state, and thereafter, the nozzle plate is vertically pulled out from the ink and immediately held to incline at angle of 45 °. In order to realize ejection stability practically, it is necessary for Ink repellency above to be 90 second or less.

A: Ink repellencies of the nozzle plate after immersion in an ink were 45 seconds or less.

B: Ink repellencies of the nozzle plate after immersion in an ink were 90 seconds or less.

C: Ink repellencies of the nozzle plate after immersion in an ink were in the range of 90 to 300 seconds; however it was recovered to 90 seconds or less by nozzle plate cleaning with new ink and waist.

D: Ink repellencies of the nozzle plate after immersion in an ink were in a state that ink was remained on the nozzle plate after 300 seconds; and was not recovered even by nozzle plate cleaning with new ink and waist.

### (Evaluation of High Temperature Stability)

Each ink was stored in a glass bottle with airtight stopper at 70 °C for 7 days and then the viscosity thereof at 25 °C was determined by oscillating viscometer (VISCOMATE VM-1G-MH produced by YAMAICHI. CO. LTD). High temperature stability was evaluated based on the following criteria.

A: Viscosity variation rate before and after high temperature treatment is less than 5%.

B: Viscosity variation rate before and after high temperature treatment is 5% - less than 10%.

C: Viscosity variation rate before and after high temperature treatment is at least 10%.

### «Formed Image Evaluation»

Under an ambience of 25 °C and 70% RH, a solid image of a film thickness of 7 µm was printed on polyethylene terephthalate film using piezo head 512SH (produced by Konica Minolta IJ Technologies, Inc.) charged with each ink, followed by irradiation of each of the light intensities of 15, 40, and 100 mJ/cm² using a high pressure mercury lamp to form a cured film. The film surface immediately after curing was finger-touched to confirm the presence or absence of surface tackiness. Curability was evaluated based on the following criteria.
A: No tackiness is noted.
B: Slight tackiness is noted.
C: Definite tackiness is noted.

### (Evaluation of Cured Film Flexibility)

A UV ink-jet printer mounted with piezo head 512SH (produced by Konica Minolta IJ Technologies, Inc.) and an LED of 365 nm was charged with each ink and a solid image of 200% was formed on a tarpaulin substrate. Then, under an ambience of 25 °C and 55% RH, bending test was conducted 20 times in which the image formed side faced outward. Cured film flexibility was evaluated based on the following criteria.
A: No cracks are created even by strong bending.
B: Slight cracks are created by strong bending.
C: Cracks are created by strong bending and the bended portion turns white.

### (Evaluation of Weather Resistance)

An ink was coated at a thickness of 3 µm on vinyl chloride film using a UV ink-jet printer mounted with piezo head 512SH (produced by Konica Minolta IJ Technologies, Inc.) and an LED of 365 nm charged with each ink. Then, a cured film was formed by irradiating UV radiation of 100 mJ using a high pressure mercury lamp. Using accelerating weather resistance tester QUV (produced by Q-Lab Corp.), a cycle of UV irradiation and humidification/condensation was carried out for 1 month, followed by visual observation of the resulting cured film state. Weather resistance was evaluated based on the following criteria.
A: A cured film is unchanged.
B: A cured film is slightly changed with respect to gloss.
C: A cured film is washed away, resulting in lowered density.

The thus-obtained results are listed in Table 3.

**Table 3**

| No. of Ink | Evaluation of Ink | | Evaluation of formed image | | | | | Re- marks |
|---|---|---|---|---|---|---|---|---|
| | Nozzle ink repellency | Stabilit at hight temperature | Curability (*1) | | | Flexibility of film | Weather resistance | |
| | | | 15 | 40 | 100 | | | |
| 1 | A | A | A | A | A | A | A | Inv. |
| 2 | A | A | A | A | A | A | A | Inv. |
| 3 | B | A | A | A | A | A | A | Inv. |
| 4 | B | A | A | A | A | A | A | Inv. |
| 5 | B | A | A | A | A | A | A | Inv. |
| 6 | B | A | A | A | A | A | A | Inv. |
| 7 | B | A | A | A | A | A | A | Inv. |
| 8 | B | A | A | A | A | A | A | Inv. |
| 9 | B | A | A | A | A | A | A | Inv. |
| 10 | A | A | A | A | A | A | A | Inv. |
| 11 | A | A | A | A | A | A | A | Inv. |
| 12 | A | A | A | A | A | A | A | Inv. |
| 13 | A | A | A | A | A | A | A | Inv. |
| 14 | A | A | A | A | A | A | A | Inv. |
| 15 | A | A | A | A | A | A | A | Inv. |
| 16 | A | A | A | A | A | A | A | Inv. |
| 17 | A | A | A | A | A | A | A | Inv. |
| 18 | A | A | A | A | A | A | A | Inv. |
| 19 | A | A | A | A | A | A | A | Inv. |
| 20 | A | A | A | A | A | A | A | Inv. |
| 21 | A | A | A | A | A | A | A | Inv. |
| 22 | A | A | A | A | A | A | A | Inv. |
| 23 | A | A | B | B | A | A | A | Inv. |
| 24 | A | A | B | B | B | B | B | Inv. |
| 25 | B | A | B | B | B | B | B | Inv. |
| 26 | B | A | B | B | B | B | B | Inv. |
| 27 | B | A | B | B | B | B | B | Inv. |
| 28 | B | A | B | B | B | B | B | Inv. |
| 29 | B | A | B | B | B | B | B | Inv. |
| 30 | B | A | B | B | B | B | B | Inv. |
| 31 | B | A | B | B | B | B | B | Inv. |
| 32 | B | A | B | B | B | B | B | Inv. |
| 33 | B | A | B | B | B | B | B | Inv. |
| 34 | D | C | B | B | B | B | B | Comp. |
| 35 | D | C | B | B | B | B | B | Comp. |
| 36 | C | B | A | A | A | C | C | Comp. |

| | | | | | | | | |
|---|---|---|---|---|---|---|---|---|
| Inv.: Present Invention, Comp.: Comparatives Example *1: Unit mJ/cm² | | | | | | | | |

The results described in Table3 clearly show that any of the inks of the present invention exhibits excellent curability, flexibility, and weather resistance, as well as storage stability (increase of ink viscosity, nozzle ink repellency). On the contrary, any ink containing a vinyl ether compound, radical polymerization inhibitor, photo polymerization initiator in which the amount of generation of protonic acid falls out of the upper range specified by the present invention; or any ink containing a vinyl ether compound, photo polymerization initiator in which the amount of generation of protonic acid falls within the range specified by the present invention, and without containing radical polymerization inhibitor, exhibits extremely lower storage stability. Further, any of the inks containing a well-known cationically polymerizable compound other than a vinyl ether compound exhibits poor flexibility, and weather resistance.

Herein, any of the prepared inks of the present invention produced minimal odor during printing and curing and also printed matter had minimal odor.

### Example 2

### «Ink Preparation»

### [Preparation of Pigment Dispersions]

Pigment dispersions 7 - 11 each were obtained by dispersing, at the same time, the pigment, pigment dispersant B (SOLUSPERS24000SC, produced by Nippon Loopresol Co., Inc.), and cyclohexane dimethanol divinyl ether (VE-4) described in Table 4 in a sand mill for 4 hours.

### [Preparation of Inks]

Subsequently, as described in Table 4, cationically polymerizable compounds, a radical polymerization inhibitor (RS-1 - RS-8), a photo-cationic polymerization initiator (PI-1 - PI-3), and a sensitizer (DEA) were added to each of the thus-prepared pigment dispersion at a predetermined amount of each and the resulting mixture was dissolved, followed by filtration using a membrane filter of 0.85 µm to prepare inks 37 - 74.

**Table 4**

| No. of Ink | Pigment Dispersion | | | | | Cationically polymerizable compound | | | | | | | | | |
|---|---|---|---|---|---|---|---|---|---|---|---|---|---|---|---|
| | No. | Pigment | | Dispersant B | VE-4 | Vinyl ether compound | | | | | | | | Others | |
| | | Species | Content | | | VE-1 | VE-2 | VE-3 | VB-4 | VE-5 | VE-6 | VE-7 | VE-8 | OXT | EP |
| 37 | 7 | PB | 2.5 | 1.0 | 12 | | | | 79.48 | | | | | | |
| 38 | 7 | PB | 2.5 | 1.0 | 12 | | | | 79.48 | | | | | | |
| 39 | 7 | PB | 2.5 | 1.0 | 12 | | | | 79.48 | | | | | | |
| 40 | 7 | PB | 2.5 | 1.0 | 12 | 25 | | | 54.48 | | | | | | |
| 41 | 7 | PB | 2.5 | 1.0 | 12 | 25 | | | 54.48 | | | | | | |
| 42 | 7 | PB | 2.5 | 1.0 | 12 | | 25 | | 54.48 | | | | | | |
| 43 | 7 | PB | 2.5 | 1.0 | 12 | | | 25 | 54.48 | | | | | | |
| 44 | 7 | PB | 2.5 | 1.0 | 12 | 25 | | | 54.48 | | | | | | |
| 45 | 7 | PB | 2.5 | 1.0 | 12 | 25 | | | 54.48 | | | | | | |
| 46 | 7 | PB | 2.5 | 1.0 | 12 | 25 | | | 54.48 | | | | | | |
| 47 | 7 | PB | 2.5 | 1.0 | 12 | 25 | | | 54.48 | | | | | | |
| 48 | 7 | PB | 2.5 | 1.0 | 12 | 25 | | | 54.48 | | | | | | |
| 49 | 7 | PB | 2.5 | 1.0 | 12 | 25 | | | 54.48 | | | | | | |
| 50 | 7 | PB | 2.5 | 1.0 | 12 | 25 | | | 54.48 | | | | | | |
| 51 | 7 | PB | 2.5 | 1.0 | 12 | 25 | | | 54.48 | | | | | | |
| 52 | 8 | PY | 3.0 | 1.0 | 12 | 25 | | | 53.98 | | | | | | |
| 53 | 8 | PY | 3.0 | 1.0 | 12 | 25 | | | 53.98 | | | | | | |
| 54 | 9 | PR | 4.0 | 1.0 | 12 | 25 | | | 52.98 | | | | | | |
| 55 | 9 | PR | 4.0 | 1.0 | 12 | 25 | | | 52.98 | | | | | | |
| 56 | 10 | CB1 | 2.0 | 1.0 | 12 | 25 | | | 54.98 | | | | | | |

| | | | | | | | | | | | | | | | |
|---|---|---|---|---|---|---|---|---|---|---|---|---|---|---|---|
| VE-4: Cyclohexanedimethanol divinyl ether, VE-5: Cyclohexanediol divinyl ether VE-6: Norbornyldimethanol divinyl ether, VE-7: Hydroquinone divinyl ether VE-8: Oxanorbornanedimethanol divinyl ether | | | | | | | | | | | | | | | |

**Table 4(Continued-1)**

| No. of Ink | Radical polymerization inhibitor | | Photo-cationic polymerization initiator | | Sensitizer DEA | Remarks |
|---|---|---|---|---|---|---|
| | Species | Content | Species | Content | | |
| 37 | RS-1 | 0.02 | PI-1 | 4.0 | 1.0 | Present Invention |
| 38 | RS-1 | 0.02 | PI-2 | 4.0 | 1.0 | Present Invention |
| 39 | RS-1 | 0.02 | PI-3 | 4.0 | 1.0 | Present Invention |
| 40 | RS-1 | 0.02 | PI-1 | 4.0 | 1.0 | Present Invention |
| 41 | RS-1 | 0.02 | PI-2 | 4.0 | 1.0 | Present Invention |
| 42 | RS-1 | 0.02 | PI-2 | 4.0 | 1.0 | Present Invention |
| 43 | RS-1 | 0.02 | PI-2 | 4.0 | 1.0 | Present Invention |
| 44 | RS-1 | 0.02 | PI-3 | 4.0 | 1.0 | Present Invention |
| 45 | RS-2 | 0.02 | PI-2 | 4.0 | 1.0 | Present Invention |
| 46 | RS-3 | 0.02 | PI-2 | 4.0 | 1.0 | Present Invention |
| 47 | RS-4 | 0.02 | PI-2 | 4.0 | 1.0 | Present Invention |
| 48 | RS-5 | 0.02 | PI-2 | 4.0 | 1.0 | Present Invention |
| 49 | RS-6 | 0.02 | PI-2 | 4.0 | 1.0 | Present Invention |
| 50 | RS-7 | 0.02 | PI-2 | 4.0 | 1.0 | Present Invention |
| 51 | RS-8 | 0.02 | PI-2 | 4.0 | 1.0 | Present Invention |
| 52 | RS-1 | 0.02 | PI-1 | 4.0 | 1.0 | Present Invention |
| 53 | RS-1 | 0.02 | PI-2 | 4.0 | 1.0 | Present Invention |
| 54 | RS-1 | 0.02 | PI-1 | 4.0 | 1.0 | Present Invention |
| 55 | RS-1 | 0.02 | PI-2 | 4.0 | 1.0 | Present Invention |
| 56 | RS-1 | 0.02 | PI-1 | 4.0 | 1.0 | Present Invention |

| | | | | | | |
|---|---|---|---|---|---|---|
| VE-4: Cyclohexanedimethanol divinyl ether VE-5: Cyclohexanediol divinyl ether VE-6: Norbornyldimethanol divinyl ether VE-7: Hydroquinone divinyl ether VE-8: Oxanorbornanedimethanol divinyl ether | | | | | | |

**Table 4(Continued-2)**

| No. of Ink | Pigment Dispersion | | | | | Cationically polymerizable compound | | | | | | | | | |
|---|---|---|---|---|---|---|---|---|---|---|---|---|---|---|---|
| | No. | Pigment | | Dispersant B | VE-4 | Vinyl ether compound | | | | | | | | Others | |
| | | Species | Content | | | VE-1 | VE-2 | VE-3 | VE-4 | VE-5 | VE-6 | VE-7 | VE-8 | OXT | EP |
| 57 | 10 | CB1 | 2.0 | 1.0 | 12 | 25 | | | 54.98 | | | | | | |
| 58 | 11 | Ti | 8.0 | 1.0 | 12 | 25 | | | 48.98 | | | | | | |
| 59 | 11 | Ti | 8.0 | 1.0 | 12 | 25 | | | 48.98 | | | | | | |
| 60 | 7 | PB | 2.5 | 1.0 | 12 | | | | 54.48 | | | | | 20 | 5 |
| 61 | 7 | PB | 2.5 | 1.0 | 12 | | | | 39.48 | | | | | 30 | 10 |
| 62 | 7 | PB | 2.5 | 1.0 | 12 | | | | 24.48 | | | | | 40 | 15 |
| 63 | 7 | PB | 2.5 | 1.0 | 12 | | | | | 79.48 | | | | | |
| 64 | 7 | PB | 2.5 | 1.0 | 12 | 25 | | | | 54.48 | | | | | |
| 65 | 8 | PY | 3.0 | 1.0 | 12 | 25 | | | | 53.98 | | | | | |
| 66 | 9 | PR | 4.0 | 1.0 | 12 | 25 | | | | 52.98 | | | | | |
| 67 | 10 | CB1 | 2.0 | 1.0 | 12 | 25 | | | | 54.98 | | | | | |
| 68 | 11 | Ti | 8.0 | 1.0 | 12 | 25 | | | | 48.98 | | | | | |
| 69 | 7 | PB | 2.5 | 1.0 | 12 | | | | | 54.48 | | | | 20 | 5 |
| 70 | 7 | PB | 2.5 | 1.0 | 12 | | | | | 39.48 | | | | 30 | 10 |
| 71 | 7 | PB | 2.5 | 1.0 | 12 | | | | | 24.48 | | | | 40 | 15 |
| 72 | 7 | PB | 2.5 | 1.0 | 12 | 25 | | | | | 54.48 | | | | |
| 73 | 7 | PB | 2.5 | 1.0 | 12 | 25 | | | | | | 54.48 | | | |
| 74 | 7 | PB | 2.5 | 1.0 | 12 | 25 | | | | | | | 54.48 | | |

| | | | | | | | | | | | | | | | |
|---|---|---|---|---|---|---|---|---|---|---|---|---|---|---|---|
| VE-4: Cyclohexanedimethanol divinyl ether VE-5: Cyclohexanediol divinyl ether VE-6: Norbornyldimethanol divinyl ether VE-7: Hydroquinone divinyl ether VE-8: Oxanorbornanedimethanol divinyl ether | | | | | | | | | | | | | | | |

**Table 4(Continued-3)**

| No. of Ink | Radical polymerization inhibitor | | Photo-cationic polymerization initiator | | Sensitize r DEA | Remarks |
|---|---|---|---|---|---|---|
| | Species | Content | Species | Content | | |
| 57 | RS-1 | 0.02 | PI-2 | 4.0 | 1.0 | Present Invention |
| 58 | RS-1 | 0.02 | PI-1 | 4.0 | 1.0 | Present Invention |
| 59 | RS-1 | 0.02 | PI-2 | 4.0 | 1.0 | Present Invention |
| 60 | RS-1 | 0.02 | PI-2 | 4.0 | 1.0 | Present Invention |
| 61 | RS-1 | 0.02 | PI-2 | 4.0 | 1.0 | Present Invention |
| 62 | RS-1 | 0.02 | PI-2 | 4.0 | 1.0 | Present Invention |
| 63 | RS-1 | 0.02 | PI-2 | 4.0 | 1.0 | Present Invention |
| 64 | RS-1 | 0.02 | PI-2 | 4.0 | 1.0 | Present Invention |
| 65 | RS-1 | 0.02 | PI-2 | 4.0 | 1.0 | Present Invention |
| 66 | RS-1 | 0.02 | PI-2 | 4.0 | 1.0 | Present Invention |
| 67 | RS-1 | 0.02 | PI-2 | 4.0 | 1.0 | Present Invention |
| 68 | RS-1 | 0.02 | PI-2 | 4.0 | 1.0 | Present Invention |
| 69 | RS-1 | 0.02 | PI-2 | 4.0 | 1.0 | Present Invention |
| 70 | RS-1 | 0.02 | PI-2 | 4.0 | 1.0 | Present Invention |
| 71 | RS-1 | 0.02 | PI-2 | 4.0 | 1.0 | Present Invention |
| 72 | RS-1 | 0.02 | PI-2 | 4.0 | 1.0 | Present Invention |
| 73 | RS-1 | 0.02 | PI-2 | 4.0 | 1.0 | Present Invention |
| 74 | RS-1 | 0.02 | PI-2 | 4.0 | 1.0 | Present Invention |

| | | | | | | |
|---|---|---|---|---|---|---|
| VE-4: Cyclohexanedimethanol divinyl ether VE-5: Cyclohexanediol divinyl ether VE-6: Norbornyldimethanol divinyl ether VE-7: Hydroquinone divinyl ether VE-8: Oxanorbornanedimethanol divinyl ether | | | | | | |

### «Evaluation of Inks»

### «Formed Image Evaluation»

### (Evaluation of Curability 2)

Under an ambience of 25 °C and 80% RH (higher temperature and higher humidity than Example 1), a solid image of a film thickness of 3 µm (thinner and more sensitive for humidity than Example 1) was printed on polyethylene terephthalate film by ejecting each ink using piezo head 512SH (produced by Konica Minolta IJ Technologies, Inc.), followed by irradiation of the light intensity of 15 mJ/cm² using a high pressure mercury lamp to form a cured film. The film surface immediately after curing was finger-touched to confirm the presence or absence of surface tackiness. Curability 2 was evaluated based on the following criteria.
A: No tackiness is noted.
B: Slight tackiness is noted.
C: Definite tackiness is noted.

### (Color change of cured film (Yellowing))

A part of cured film prepared in the evaluation of curability 2 was stored in constant temperature at 70 °C for 4 days and color change of cured film was observed.
A: No yellow color change is noted.
B: Slight yellow color change is noted.
C: Definite yellow color change is noted.

Other items were evaluated as the same method as Example 1. Results were shown in Table 5.

**Table 5**

| No. of Ink | Evaluation of Ink | | Evaluation of formed image | | | | | Remarks |
|---|---|---|---|---|---|---|---|---|
| | Nozzle ink repellency | Stability at hight temperature | Curability 1 | Curability 2 | Flexibility of film | Weather resistance | Yellowing of film | |
| | | | 15mJ/cm² | 15mJ/cm² | | | | |
| 1 | A | A | A | B | A | A | B | Present Invention |
| 37 | A | A | A | A | A | A | A | Present Invention |
| 38 | A | A | A | A | A | A | A | Present Invention |
| 39 | A | A | A | A | A | A | A | Present Invention |
| 40 | A | A | A | A | A | A | A | Present Invention |
| 41 | A | A | A | A | A | A | A | Present Invention |
| 42 | A | A | A | A | A | A | A | Present Invention |
| 43 | A | A | A | A | A | A | A | Present Invention |
| 44 | A | A | A | A | A | A | A | Present Invention |
| 45 | B | A | A | A | A | A | A | Present Invention |
| 46 | B | A | A | A | A | A | A | Present Invention |
| 47 | B | A | A | A | A | A | A | Present Invention |
| 48 | B | A | A | A | A | A | A | Present Invention |
| 49 | B | A | A | A | A | A | A | Present Invention |
| 50 | B | A | A | A | A | A | A | Present Invention |
| 51 | B | A | A | A | A | A | A | Present Invention |
| 52 | A | A | A | A | A | A | A | Present Invention |
| 53 | A | A | A | A | A | A | A | Present Invention |
| 54 | A | A | A | A | A | A | A | Present Invention |
| 55 | A | A | A | A | A | A | A | Present Invention |
| 56 | A | A | A | A | A | A | A | Present Invention |
| 57 | A | A | A | A | A | A | A | Present Invention |
| 58 | A | A | A | A | A | A | A | Present Invention |
| 59 | A | A | A | A | A | A | A | Present Invention |
| 60 | A | A | A | A | A | A | A | Present Invention |
| 61 | A | A | A | A | A | A | A | Present Invention |
| 62 | B | A | A | A | A | A | A | Present Invention |
| 63 | A | A | A | A | A | A | A | Present Invention |
| 64 | A | A | A | A | A | A | A | Present Invention |
| 65 | A | A | A | A | A | A | A | Present Invention |
| 66 | A | A | A | A | A | A | A | Present Invention |
| 67 | A | A | A | A | A | A | A | Present Invention |
| 68 | A | A | A | A | A | A | A | Present Invention |
| 69 | A | A | A | A | A | A | A | Present Invention |
| 70 | A | A | A | A | A | A | A | Present Invention |
| 71 | B | A | A | A | A | A | A | Present Invention |
| 72 | A | A | A | A | A | A | A | Present Invention |
| 73 | A | A | A | B | A | A | A | Present Invention |
| 74 | A | A | A | B | A | A | A | Present Invention |

As shown in Table 5, Inks 37 to 74 exhibit good results in each evaluation item, especially good effect in the evaluation of curability 2 and yellow color change.

## Claims

1. An actinic energy radiation curable ink-jet ink comprising a cationically polymerizable compound, a photo-cationic polymerization initiator and a radical polymerization inhibitor, wherein
the cationically polymerizable compound comprises a compound having a ring skeleton and 2 or more vinyl ether groups,
the photo-cationic polymerization initiator is a photo acid generator, an amount of generation of protonic acid from the photo acid generator is 1 x 10⁻⁴ mol/L or less;
wherein the amount of generation of protonic acid is defined as a difference of a hydrogen ion concentration (mol/L) in a dioxane solution between immediately after preparation and after refluxing when 0.02 mol/L of the photo acid generator in the dioxane solution are refluxed 20 hours under atmospheric pressure.

2. The actinic energy radiation curable ink-jet ink of item 1, wherein the photo acid generator substantially does not include a sulfonium salt compound represented by Formula [A] ; 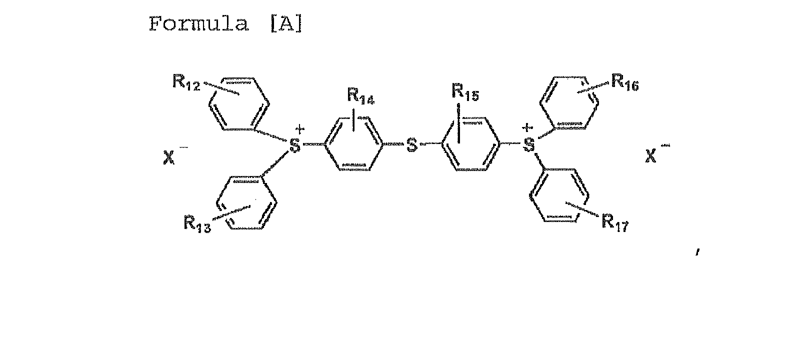 wherein R₁₂ to R₁₇ each represent a hydrogen atom or a substituent.

3. The actinic energy radiation curable ink-jet ink of claim 1 or 2, wherein the photo acid generator is at least one of a sulfonium salt compound selected from Formula [1] to [5]; 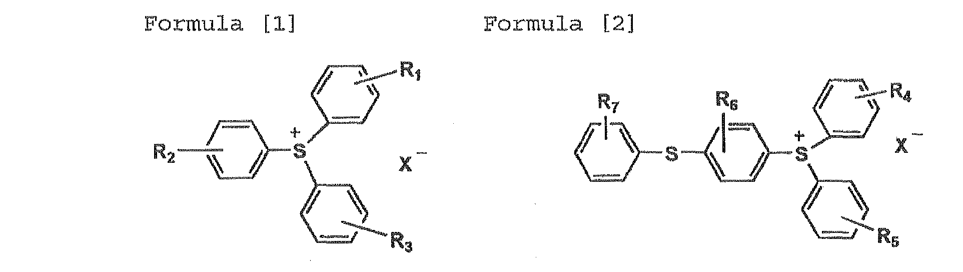 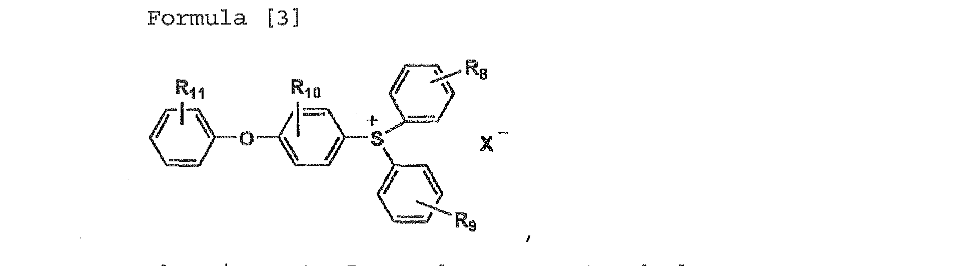 wherein R₁ to R₁₁ each represent a hydrogen atom or a substituent; 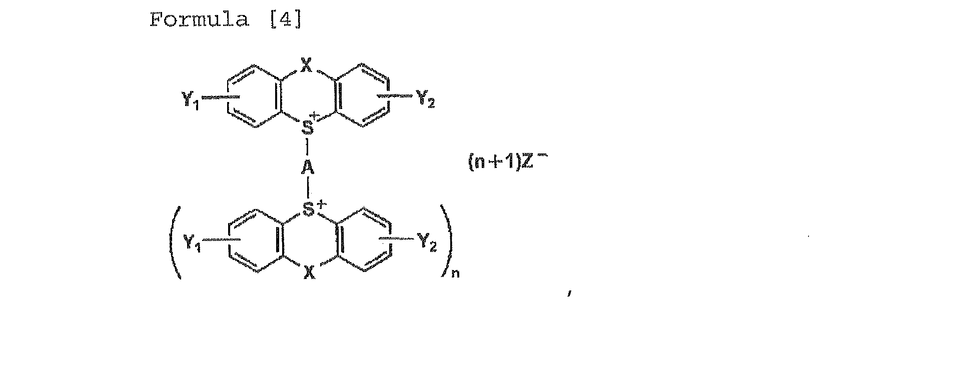 wherein n represents 1 or 2; X represents S, O, CH₂, CO, a single bond or N-R wherein R represents a hydrogen atom, an alkyl group or an aryl group; Y₁ and Y₂ each represent an hydrogen atom, a linear or a branched alkyl group having 1 to 6 carbon atoms, a cycloalkyl group, O-alkyl group, a hydroxyl group, a halogen atom, S-alkyl group or S-aryl group; Z⁻ represents MQₚ; M represents B, P, As or Sb; Q represents F, Cl, Br, I or perfluorophenyl; p represents an integer of 4 to 6; A represents Formula [4A]; 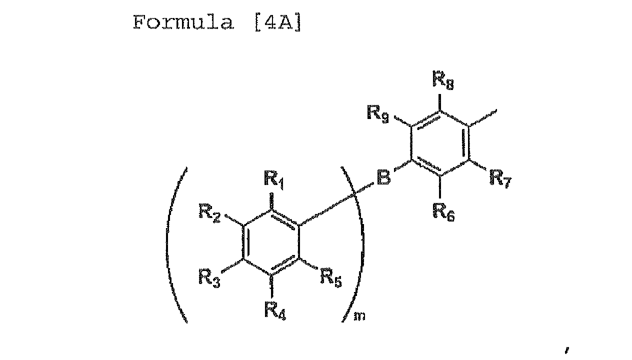 wherein m represents 1 or 2; provided that at least one of R₁ to R₅ is a hydrogen atom, R₁ to R₉ represent a single bond, a hydrogen atom, a halogen atom, a nitro group, a linear or a branched alkyl group having 1 to 6 carbon atoms, a linear or a branched alkoxy group having 1 to 6 carbon atoms, or a linear or a branched alkylthio group having 1 to 6 carbon atoms;
when m is 1, B represents O, S, SO, So₂, CH₂, a single bond, NR (R represents a hydrogen atom or a linear or a branched alkyl group having 1 to 6 carbon atoms) or a linear or a branched alkylene group having 2 to 18 carbon atoms and has two hetero atoms selected from O, S and N-R at terminals; when m is 2, B represents N, a linear or a branched alkyl group having 3 to 18 carbon atoms and has three hetero atoms selected from O, S and N-R; 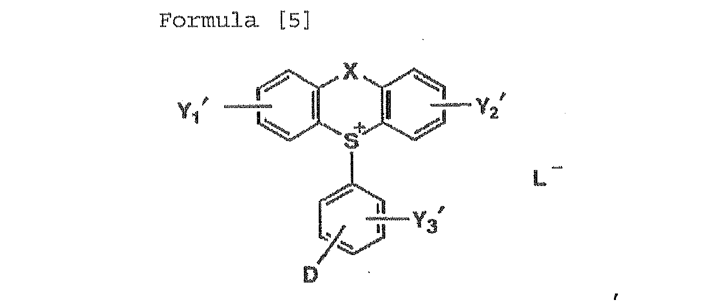 wherein X represents S, O, CH₂, CO, a single bond or N-R wherein R represents a hydrogen atom, an alkyl group or an aryl group; Y₁', Y₂' and Y₃' each represent a hydrogen atom, a linear or a branched alkyl group having 1 to 6 carbon atoms, a cycloalkyl group, O-alkyl group, a hydroxyl group, a halogen atom, S-alkyl group or S-aryl group or NR₁R₂, R₁, R₂ represents a hydrogen atom, a linear or a branched alkyl group, a cycloalkyl group or an aryl group; L⁻ represents MQₚ; M represents B, P, As or Sb; Q represent F, Cl, Br, I or perfluorophenyl; p represents an integer of 4 to 6;
D represents a linear or a branched alkyl group or a cycloalkyl group having 2 to 6 carbon atoms having 1 or more groups as a substituent selected from OH, OR, NH₂, NHR, NR₁R₂, SH and SR (R, R₁ and R₂ each represent a hydrogen atom, a linear or a branched alkyl group, a cycloalkyl group or an aryl group), a linear or a branched alkylthio group or a cycloalkylthio group having number of 2 to 6 carbon atoms having 1 or more groups as a substituent selected from SH, SR, OH, OR, NH₂, NHR and NR₁R₂ (R, R₁ and R₂ each represent a hydrogen atom, an aryl group, a linear or a branched alkyl group, a cycloalkyl group or an aryl group), or NR₃R₄ (R₃ and R₄ each represent a hydrogen atom, a linear or a branched alkyl group having 1 to 12 carbon atoms).

4. The actinic energy radiation curable ink-jet ink of any one of claims 1 to 3 comprising 35 % or more by mass based on the inkjet ink of the compound having a ring skeleton and 2 or more vinyl ether groups.

5. The actinic energy radiation curable ink-jet ink of any one of claims 1 to 4, wherein the ring skeleton of the compound having the ring skeleton and 2 or more vinyl ether groups comprises an alicyclic skeleton.

6. The actinic energy radiation curable ink-jet ink of any one of claims 1 to 5, wherein the ring skeleton of the compound having the ring skeleton and 2 or more vinyl ether groups comprises a cyclohexane skeleton.

7. The actinic energy radiation curable ink-jet ink of any one of claims 1 to 6, wherein the compound having the ring skeleton and 2 or more vinyl ether groups comprises a substituted or unsubstituted cyclohexane divinyl ether.

8. The actinic energy radiation curable ink-jet ink of any one of claims 1 to 7, wherein the cationically polymerizable compound further comprises a compound having the vinyl ether group but without having the ring skeleton.

9. The actinic energy radiation curable ink-jet ink of any one of claims 1 to 8, wherein an amount of generation of protonic acid from the photo acid generator is 5 x 10⁻⁵ mol/L or less.

10. A method for forming an ink-jet image comprising steps of:
jetting the actinic energy radiation curable ink-jet ink of any one of claims 1 to 9 from an inkjet nozzle on a recording media; and then
curing the actinic energy radiation curable ink-jet ink by irradiating the actinic energy ray.
